# EUROPEAN PATENT APPLICATION

(11) **EP 4 228 316 A1**
(43) Date of publication of application: **16.08.2023**
(21) Application number: 21890969.5
(22) Date of filing: 28.10.2021
(51) Int. Cl.: H04W 28/18

(54) **DATA TRANSMISSION METHOD AND APPARATUS, DEVICE, AND COMPUTER READABLE STORAGE MEDIUM**

(30) Priority: 12.11.2020 CN 202011263044
(71) Applicant: Huawei Technologies Co., Ltd., Shenzhen, Guangdong 518129 (CN)
(72) Inventor: KANG, Jiao, Shenzhen, Guangdong 518129 (CN); LIANG, Qiandeng, Shenzhen, Guangdong 518129 (CN)
(74) Representative: MERH-IP Matias Erny Reichl Hoffmann Patentanwälte PartG mbB
(86) International application number: PCT/CN2021/126982
(87) International publication number: WO 2022/100442

(57) **Abstract**

Embodiments of this application disclose a data transmission method, a device, and a computer-readable storage medium, and are applied to the field of communication technologies, to reduce consumption of network transmission resources. The method in embodiments of this application includes: A first end sends, to a second end, a transport layer protocol connection establishment request message carrying first capability information, and receives a transport layer protocol connection establishment response message from the second end, where the first capability information indicates a support status of the first end for a plurality of types of indication information, and second capability information carried in the transport layer protocol connection establishment response message indicates a support status of the second end for the plurality of types of the indication information or indicates a joint support status of the first end and the second end for the plurality of types of the indication information. The first end sends, to the second end based on that the second capability information indicates that the second end supports a first type of the indication information or indicates that the first end and the second end jointly support the first type of the indication information, a message carrying indication information of the first type.

## Description

This application claims priority to Chinese Patent Application No. 202011263044.5, filed with China National Intellectual Property Administration on November 12, 2020 and entitled "DATA TRANSMISSION METHOD AND APPARATUS, DEVICE, AND COMPUTER-READABLE STORAGE MEDIUM", which is incorporated herein by reference in its entirety.

### TECHNICAL FIELD

Embodiments of this application relate to the field of communication technologies, and in particular, to a data transmission method and apparatus, a device, and a computer-readable storage medium.

### BACKGROUND

Currently, a terminal and a server usually transmit data by using a transport layer protocol. There are many transport layer protocols. For example, both the multipath transmission control protocol (multipath transmission control protocol, MPTCP) and the quick user datagram protocol Internet connection (Quick UDP Internet Connection, QUIC) protocol are transport layer protocols.

In a data transmission process, the terminal and the server usually include corresponding indication information in messages. The indication information may indicate a peer end to perform an operation, or may convey specific information to the peer end. However, there are a plurality of types of indication information, and any terminal or server may fail to process all types of indication information.

Therefore, after the terminal or the server receives the message from the peer end, if the terminal or the server cannot process indication information of a specific type carried in the message, the terminal or the server discards the indication information of the specific type.

Clearly, the discarded indication information does not implement an indication function, and consumes network transmission resources.

### SUMMARY

Embodiments of this application provide a data transmission method, a device, and a computer-readable storage medium, to reduce consumption of network transmission resources.

A first aspect of embodiments of this application provides a data transmission method, including:

A first end sends a transport layer protocol connection establishment request message to a second end. The transport layer protocol connection establishment request message carries first capability information, a transport layer protocol may be any transport layer protocol such as the transmission control protocol TCP or the user datagram protocol UDP, the first capability information indicates a support status of the first end for a plurality of types of indication information, and the support status may be supporting or not supporting. The first end receives, from the second end, a transport layer protocol connection establishment response message for the transport layer protocol connection establishment request message. The transport layer protocol connection establishment response message carries second capability information, the second capability information indicates a support status of the second end for the plurality of types of the indication information or indicates a joint support status of the first end and the second end for the plurality of types of the indication information, and the joint support status may be understood as that when the first end and the second end both support a specific type of the information, the second capability information indicates that the first end and the second end jointly support the type of the information, and when at least one of the first end and the second end does not support a specific type of the information, the second capability information indicates that the first end and the second end do not support the type of the information. The first end sends, to the second end based on that the second capability information indicates that the second end supports a first type of the indication information or indicates that the first end and the second end jointly support the first type of the indication information, a message carrying indication information of the first type. The first type of the information is one of the plurality of types of the information, and before sending the message carrying the indication information of the first type, the first end determines that the first end supports the first type of the indication information.

The first end determines, by using the second capability information, the support status of the second end for the plurality of types of the indication information. Therefore, the first end may determine that the second end supports the first type of the information, and may send, to the second end, the message carrying the indication information of the first type. In this way, sending, to the second end, indication information of a type not supported by the second end is avoided, to reduce consumption of network transmission resources caused by transmitting the indication information of the type not supported by the second end. In addition, additional overheads caused by a process in which the second end processes indication information that cannot be processed can also be avoided, and an exception caused by a process in which a peer end processes the indication information that cannot be processed can also be avoided.

In an implementation, the transport layer protocol connection establishment request message is a quick user datagram protocol Internet connection QUIC establishment request message, and the transport layer protocol connection establishment response message is a QUIC establishment response message; or the transport layer protocol connection establishment request message is a multipath MPQUIC establishment request message, and the transport layer protocol connection establishment response message is an MPQUIC establishment response message. The QUIC protocol is a new user datagram protocol (User Datagram Protocol, UDP)-based multiplexed and secure transport protocol, and MPQUIC may be considered as an extended QUIC protocol.

This implementation provides a specific application scenario in which the transport layer protocol is QUIC or MPQUIC.

In an implementation, the indication information is a frame in QUIC or MPQUIC, and the plurality of types of the indication information correspond to a plurality of types of the frame. For example, the frame may be a PADDING frame, a PING frame, or an ACK frame. Correspondingly, the first capability information indicates a support status of the first end for the plurality of types of the frame, and the second capability information indicates a support status of the second end for the plurality of types of the frame or indicates a joint support status of the first end and the second end for the plurality of types of the frame.

When the indication information is QUIC or MPQUIC, the first end and the second end may determine, through capability negotiation, a type of the frame that is supported by the peer end.

In an implementation, the transport layer protocol connection establishment request message is a multipath transmission control protocol MPTCP connection establishment request message, and the transport layer protocol connection establishment response message is an MPTCP connection establishment response message.

This implementation provides a specific application scenario in which the transport layer protocol is MPTCP.

In an implementation, the indication information is an MPTCP option, the MPTCP option includes a kind (Kind) field, a length (Length) field, a subtype (Subtype) field, and a subtype-specific data (Subtype-specific data) field, and a value of the kind field is 30. The plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option. The second capability information indicates a support status of the second end for the plurality of subtypes of the MPTCP option or indicates a joint support status of the first end and the second end for the plurality of subtypes of the MPTCP option. The subtypes of the MPTCP option include MPTCP Capable MP_CAPABLE, Join MPTCP Connection MP_JOIN, Data Sequence Signal DSS, Add Address ADD_ADDR, Remove Address REMOVE_ADDR, Change Subflow Priority MP_PRIO1, Fallback MP_FAIL, Fast Close MP_FASTCLOSE, Subflow Reset MP_TCPRST, and Reserved for Private Use MP_EXPERIMENTAL.

That the first end sends, to the second end based on that the second capability information indicates that the second end supports a first type of the indication information or indicates that the first end and the second end jointly support the first type of the indication information, a message carrying indication information of the first type includes: The first end sends, to the second end based on that the second capability information indicates that the second end supports a first subtype of the MPTCP option or indicates that the first end and the second end jointly support the first subtype of the MPTCP option, a message carrying an MPTCP option of the first subtype, where the first subtype is one of the plurality of subtypes.

When the indication information is MPTCP, the first end and the second end may determine, through capability negotiation, a subtype of the MPTCP option that is supported by the peer end.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In this implementation, no new subtype of the MPTCP option is added, and the first capability information is stored in the first specific data of MPTCP Capable, so that the first capability information is carried in the MPTCP connection establishment request message.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In this implementation, no new subtype of the MPTCP option is added, and the second capability information is stored in the second specific data of MPTCP Capable, so that the second capability information is carried in the MPTCP connection establishment response message.

In an implementation, an MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype, and the extended subtype is obtained by extending a subtype of an MPTCP option that is defined in an existing standard; and the third value of the subtype-specific data field indicates third specific data of the extended subtype, and the third specific data includes the first capability information.

In this implementation, the extended subtype is added, and the first capability information is stored in the specific data field of the extended subtype, so that the first capability information is carried in the MPTCP connection establishment request message.

In an implementation, the MPTCP option in the MPTCP connection establishment request message further includes a version field, and the version field indicates MPTCP version information. A length of the version field is not specifically limited in embodiments of this application, and may be adjusted according to an actual requirement.

A value of the version field in the MPTCP option may indicate specific MPTCP version information, so that the second end can determine, with reference to the MPTCP version information, the support status of the first end for the plurality of subtypes.

In an implementation, the third specific data further includes extended first information, and content of the extended first information may be selected according to an actual requirement.

In this implementation, the extended first information in the third specific data can meet a future expansion requirement.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In this implementation, the extended subtype is added, and the second capability information is stored in the specific data field of the extended subtype, so that the second capability information is carried in the MPTCP connection establishment response message.

In an implementation, the MPTCP option in the MPTCP connection establishment response message further includes a version field, and the version field indicates MPTCP version information.

A value of the version field in the MPTCP option may indicate specific MPTCP version information, so that the first end can determine, with reference to the MPTCP version information, the support status of the second end for the plurality of subtypes.

In an implementation, the fourth specific data further includes extended second information, and content of the extended second information may be selected according to an actual requirement.

In this implementation, the extended second information in the fourth specific data can meet a future expansion requirement.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use. In some scenarios, based on a requirement of functions of the two ends, the plurality of subtypes may include only one or more of the foregoing subtypes. For example, in some scenarios, the two ends only need to determine that the peer end has a capability of establishing an MPTCP connection and a capability of joining an MPTCP connection. Therefore, the plurality of subtypes may include only MPTCP Capable and Join MPTCP Connection.

In this implementation, the plurality of subtypes may include at least one of the foregoing subtypes, so that the first capability information and the second capability information can meet requirements in various scenarios.

In an implementation, after that the first end receives, from the second end, a transport layer protocol connection establishment response message for the transport layer protocol connection establishment request message, the method further includes: The first end receives, from the second end, a message carrying indication information of a second type, where the second type of the information is one of the plurality of types of the information.

Based on capability negotiation, the message received by the first end from the second end carries the indication information of the second type supported by the first end.

A second aspect of embodiments of this application provides a data transmission method, including:

A second end receives a transport layer protocol connection establishment request message from a first end. The transport layer protocol connection establishment request message carries first capability information, a transport layer protocol may be any transport layer protocol such as the transmission control protocol TCP or the user datagram protocol UDP, the first capability information indicates a support status of the first end for a plurality of types of indication information, and the support status may be supporting or not supporting. The second end sends a transport layer protocol connection establishment response message to the first end in response to the transport layer protocol connection establishment request message. The transport layer protocol connection establishment response message carries second capability information, the second capability information indicates a support status of the second end for the plurality of types of the indication information or indicates a joint support status of the first end and the second end for the plurality of types of the indication information, and the joint support status may be understood as that when the first end and the second end both support a specific type of the information, the second capability information indicates that the first end and the second end jointly support the type of the information, and when at least one of the first end and the second end does not support a specific type of the information, the second capability information indicates that the first end and the second end do not support the type of the information. The second end receives, from the first end, a message carrying indication information of the first type, where the first type of the information is one of the plurality of types of the information.

The first end determines, by using the second capability information, the support status of the second end for the plurality of types of the indication information. Therefore, the first end may determine that the second end supports the first type of the information, and may send, to the second end, the message carrying the indication information of the first type. In this way, consumption of network transmission resources is reduced. In addition, additional overheads caused by a process in which a peer end processes indication information that cannot be processed can also be avoided, and an exception caused by the process in which the peer end processes the indication information that cannot be processed can also be avoided.

In an implementation, the transport layer protocol connection establishment request message is a quick user datagram protocol Internet connection QUIC establishment request message, and the transport layer protocol connection establishment response message is a QUIC establishment response message; or the transport layer protocol connection establishment request message is a multipath MPQUIC establishment request message, and the transport layer protocol connection establishment response message is an MPQUIC establishment response message. The QUIC protocol is a new user datagram protocol (User Datagram Protocol, UDP)-based multiplexed and secure transport protocol, and MPQUIC may be considered as an extended QUIC protocol.

This implementation provides a specific application scenario in which the transport layer protocol is QUIC or MPQUIC.

In an implementation, the indication information is a frame in QUIC or MPQUIC, and the plurality of types of the indication information correspond to a plurality of types of the frame. For example, the frame may be a PADDING frame, a PING frame, or an ACK frame. Correspondingly, the first capability information indicates a support status of the first end for the plurality of types of the frame, and the second capability information indicates a support status of the second end for the plurality of types of the frame or indicates a joint support status of the first end and the second end for the plurality of types of the frame.

When the indication information is QUIC or MPQUIC, the first end and the second end may determine, through capability negotiation, a type of the frame that is supported by the peer end.

In an implementation, the transport layer protocol connection establishment request message is a multipath transmission control protocol MPTCP connection establishment request message, and the transport layer protocol connection establishment response message is an MPTCP connection establishment response message.

This implementation provides a specific application scenario in which the transport layer protocol is MPTCP.

In an implementation, the indication information is an MPTCP option, the MPTCP option includes a kind (Kind) field, a length (Length) field, a subtype (Subtype) field, and a subtype-specific data (Subtype-specific data) field, and a value of the kind field is 30. The plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option. The second capability information indicates a support status of the second end for the plurality of subtypes of the MPTCP option or indicates a joint support status of the first end and the second end for the plurality of subtypes of the MPTCP option. The subtypes of the MPTCP option include MPTCP Capable MP_CAPABLE, Join MPTCP Connection MP_JOIN, Data Sequence Signal DSS, Add Address ADD_ADDR, Remove Address REMOVE_ADDR, Change Subflow Priority MP_PRIO1, Fallback MP_FAIL, Fast Close MP_FASTCLOSE, Subflow Reset MP_TCPRST, and Reserved for Private Use MP_EXPERIMENTAL.

That the second end receives, from the first end, a message carrying indication information of the first type includes: The second end receives, from the first end, a message carrying indication information of the first type, where the first subtype is one of the plurality of subtypes.

When the indication information is MPTCP, the first end and the second end may determine, through capability negotiation, a subtype of the MPTCP option that is supported by the peer end.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In this implementation, no new subtype of the MPTCP option is added, and the first capability information is stored in the first specific data of MPTCP Capable, so that the first capability information is carried in the MPTCP connection establishment request message.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In this implementation, no new subtype of the MPTCP option is added, and the second capability information is stored in the second specific data of MPTCP Capable, so that the second capability information is carried in the MPTCP connection establishment response message.

An MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype, and the extended subtype is obtained by extending a subtype of an MPTCP option that is defined in an existing standard; and the third value of the subtype-specific data field indicates third specific data of the extended subtype, and the third specific data includes the first capability information.

In this implementation, the extended subtype is added, and the first capability information is stored in the specific data field of the extended subtype, so that the first capability information is carried in the MPTCP connection establishment request message.

In an implementation, the MPTCP option in the MPTCP connection establishment request message further includes a version field, and the version field indicates MPTCP version information. A length of the version field is not specifically limited in embodiments of this application, and may be adjusted according to an actual requirement.

A value of the version field in the MPTCP option may indicate specific MPTCP version information, so that the second end can determine, with reference to the MPTCP version information, the support status of the first end for the plurality of subtypes.

In an implementation, the third specific data further includes extended first information, and content of the extended first information may be selected according to an actual requirement.

In this implementation, the extended first information in the third specific data can meet a future expansion requirement.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In this implementation, the extended subtype is added, and the second capability information is stored in the specific data field of the extended subtype, so that the second capability information is carried in the MPTCP connection establishment response message.

In an implementation, the MPTCP option in the MPTCP connection establishment response message further includes a version field, and the version field indicates MPTCP version information.

A value of the version field in the MPTCP option may indicate specific MPTCP version information, so that the first end can determine, with reference to the MPTCP version information, the support status of the second end for the plurality of subtypes.

In an implementation, the fourth specific data further includes extended second information, and content of the extended second information may be selected according to an actual requirement.

In this implementation, the extended second information in the fourth specific data can meet a future expansion requirement.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

In this implementation, the plurality of subtypes may include at least one of the foregoing subtypes, so that the first capability information and the second capability information can meet requirements in various scenarios.

In an implementation, the second capability information indicates the joint support status of the first end and the second end for the plurality of subtypes of the MPTCP option. Before that the second end sends a transport layer protocol connection establishment response message to the first end, the method further includes: The second end determines the second capability information based on the first capability information and third capability information, where the third capability information indicates a support status of the second end for the plurality of types of the indication information.

The second end can determine the second capability information based on the first capability information and the third capability information, so that the first end can send a message to the second end based on the indicated joint support status of the first end and the second end for the plurality of subtypes of the MPTCP option.

In an implementation, after that the second end sends a transport layer protocol connection establishment response message to the first end, the method further includes: The second end sends, to the first end based on that the first capability information indicates that the first end supports a second type of the indication information, a message carrying indication information of the second type, where the second type of the information is one of the plurality of types of the information.

The second end determines, by using the first capability information, the support status of the first end for the plurality of types of the indication information. Therefore, the second end may determine the second type of the information that is supported by the first end, and may send, to the first end, the message carrying the indication information of the second type. In this way, consumption of network transmission resources is reduced.

A third aspect of embodiments of this application provides a data transmission method, including:
A first end sends a transport layer protocol connection establishment request message to a second end. A transport layer protocol may be any transport layer protocol such as the transmission control protocol TCP or the user datagram protocol UDP, first capability information indicates a support status of the first end for a plurality of types of indication information, and the support status may be supporting or not supporting. The first end receives, from the second end, a transport layer protocol connection establishment response message for the transport layer protocol connection establishment request message. The transport layer protocol connection establishment response message carries second capability information, and the second capability information indicates a support status of the second end for the plurality of types of the indication information. The first end sends an acknowledgment message to the second end. The acknowledgment message carries the first capability information, the first capability information indicates a support status of the second end for the plurality of types of the indication information or indicates a joint support status of the first end and the second end for the plurality of types of the indication information, and the joint support status may be understood as that when the first end and the second end both support a specific type of the information, the second capability information indicates that the first end and the second end jointly support the type of the information, and when at least one of the first end and the second end does not support a specific type of the information, the second capability information indicates that the first end and the second end do not support the type of the information. The first end sends, to the second end based on that the second capability information indicates that the second end supports a first type of the indication information, a message carrying indication information of the first type. The first type of the information is one of the plurality of types of the information, and before sending the message carrying the indication information of the first type, the first end determines that the first end supports the first type of the indication information.

The first end determines, by using the second capability information, the support status of the second end for the plurality of types of the indication information. Therefore, the first end may determine that the second end supports the first type of the information, and may send, to the second end, the message carrying the indication information of the first type. In this way, consumption of network transmission resources is reduced. In addition, additional overheads caused by a process in which a peer end processes indication information that cannot be processed can be avoided, and an exception caused by the process in which the peer end processes the indication information that cannot be processed can be avoided. Moreover, the first end does not include the first capability information in a request message that is sent for the first time, but sends, to the peer end only after receiving a response message from the peer end, the acknowledgment message carrying the first capability information. Therefore, security of the first capability information can be ensured.

In an implementation, the transport layer protocol connection establishment request message is a quick user datagram protocol Internet connection QUIC establishment request message, and the transport layer protocol connection establishment response message is a QUIC establishment response message; or the transport layer protocol connection establishment request message is a multipath MPQUIC establishment request message, and the transport layer protocol connection establishment response message is an MPQUIC establishment response message. The QUIC protocol is a new user datagram protocol (User Datagram Protocol, UDP)-based multiplexed and secure transport protocol, and MPQUIC may be considered as an extended QUIC protocol.

This implementation provides a specific application scenario in which the transport layer protocol is QUIC or MPQUIC.

In an implementation, the indication information is a frame in QUIC or MPQUIC, and the plurality of types of the indication information correspond to a plurality of types of the frame. For example, the frame may be a PADDING frame, a PING frame, or an ACK frame. Correspondingly, the first capability information indicates a support status of the first end for the plurality of types of the frame or indicates a joint support status of the first end and the second end for the plurality of types of the frame, and the second capability information indicates a support status of the second end for the plurality of types of the frame.

When the indication information is QUIC or MPQUIC, the first end and the second end may determine, through capability negotiation, a type of the frame that is supported by the peer end.

In an implementation, the transport layer protocol connection establishment request message is a multipath transmission control protocol MPTCP connection establishment request message, and the transport layer protocol connection establishment response message is an MPTCP connection establishment response message.

This implementation provides a specific application scenario in which the transport layer protocol is MPTCP.

In an implementation, the indication information is an MPTCP option, the MPTCP option includes a kind (Kind) field, a length (Length) field, a subtype (Subtype) field, and a subtype-specific data (Subtype-specific data) field, and a value of the kind field is 30. The plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option or indicates a joint support status of the first end and the second end for the plurality of subtypes of the MPTCP option. The second capability information indicates a support status of the second end for the plurality of subtypes of the MPTCP option. The subtypes of the MPTCP option include MPTCP Capable MP_CAPABLE, Join MPTCP Connection MP_JOIN, Data Sequence Signal DSS, Add Address ADD_ADDR, Remove Address REMOVE_ADDR, Change Subflow Priority MP_PRIO1, Fallback MP_FAIL, Fast Close MP_FASTCLOSE, Subflow Reset MP_TCPRST, and Reserved for Private Use MP_EXPERIMENTAL.

That the first end sends, to the second end based on that the second capability information indicates that the second end supports a first type of the indication information, a message carrying indication information of the first type includes: The first end sends, to the second end based on that the second capability information indicates that the second end supports a first subtype of the MPTCP option, a message carrying an MPTCP option of the first subtype, where the first subtype is one of the plurality of subtypes.

When the indication information is MPTCP, the first end and the second end may determine, through capability negotiation, a subtype of the MPTCP option that is supported by the peer end.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In this implementation, no new subtype of the MPTCP option is added, and the first capability information is stored in the first specific data of MPTCP Capable, so that the first capability information is carried in the MPTCP connection establishment request message.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In this implementation, no new subtype of the MPTCP option is added, and the second capability information is stored in the second specific data of MPTCP Capable, so that the second capability information is carried in the MPTCP connection establishment response message.

In an implementation, an MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype, and the extended subtype is obtained by extending a subtype of an MPTCP option that is defined in an existing standard; and the third value of the subtype-specific data field indicates third specific data of the extended subtype, and the third specific data includes the first capability information.

In this implementation, the extended subtype is added, and the first capability information is stored in the specific data field of the extended subtype, so that the first capability information is carried in the MPTCP connection establishment request message.

In an implementation, the MPTCP option in the MPTCP connection establishment request message further includes a version field, and the version field indicates MPTCP version information. A length of the version field is not specifically limited in embodiments of this application, and may be adjusted according to an actual requirement.

A value of the version field in the MPTCP option may indicate specific MPTCP version information, so that the second end can determine, with reference to the MPTCP version information, the support status of the first end for the plurality of subtypes.

In an implementation, the third specific data further includes extended first information, and content of the extended first information may be selected according to an actual requirement.

In this implementation, the extended first information in the third specific data can meet a future expansion requirement.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In this implementation, the extended subtype is added, and the second capability information is stored in the specific data field of the extended subtype, so that the second capability information is carried in the MPTCP connection establishment response message.

In an implementation, the MPTCP option in the MPTCP connection establishment response message further includes a version field, and the version field indicates MPTCP version information.

A value of the version field in the MPTCP option may indicate specific MPTCP version information, so that the first end can determine, with reference to the MPTCP version information, the support status of the second end for the plurality of subtypes.

In an implementation, the fourth specific data further includes extended second information, and content of the extended second information may be selected according to an actual requirement.

In this implementation, the extended second information in the fourth specific data can meet a future expansion requirement.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use. In some scenarios, based on a requirement of functions of the two ends, the plurality of subtypes may include only one or more of the foregoing subtypes. For example, in some scenarios, the two ends only need to determine that the peer end has a capability of establishing an MPTCP connection and a capability of joining an MPTCP connection. Therefore, the plurality of subtypes may include only MPTCP Capable and Join MPTCP Connection.

In this implementation, the plurality of subtypes may include at least one of the foregoing subtypes, so that the first capability information and the second capability information can meet requirements in various scenarios.

In an implementation, the first capability information indicates the joint support status of the first end and the second end for the plurality of subtypes of the MPTCP option. Before that the first end sends an acknowledgment message to the second end, the method further includes: The first end determines the second capability information based on the first capability information and third capability information, where the third capability information indicates a support status of the second end for the plurality of types of the indication information.

The first end can determine the second capability information based on the first capability information and the third capability information, so that the second end can send a message to the second end based on the indicated joint support status of the first end and the second end for the plurality of subtypes of the MPTCP option.

In an implementation, after that the first end receives, from the second end, a transport layer protocol connection establishment response message for the transport layer protocol connection establishment request message, the method further includes: The first end receives, from the second end, a message carrying indication information of a second type, where the second type of the information is one of the plurality of types of the information.

Based on capability negotiation, the message received by the first end from the second end carries the indication information of the second type supported by the first end.

A fourth aspect of embodiments of this application provides a data transmission method, including:
A second end receives a transport layer protocol connection establishment request message from a first end. The transport layer protocol connection establishment request message carries first capability information, and a transport layer protocol may be any transport layer protocol such as the transmission control protocol TCP or the user datagram protocol UDP. The second end sends a transport layer protocol connection establishment response message to the first end in response to the transport layer protocol connection establishment request message. The transport layer protocol connection establishment response message carries second capability information, and the second capability information indicates a support status of the second end for a plurality of types of indication information. The second end receives an acknowledgment message from the first end. The acknowledgment message carries first capability information, the first capability information indicates a support status of the first end for the plurality of types of the indication information or indicates a joint support status of the first end and the second end for the plurality of types of the indication information, the support status may be supporting or not supporting, and the joint support status may be understood as that when the first end and the second end both support a specific type of the information, the second capability information indicates that the first end and the second end jointly support the type of the information, and when at least one of the first end and the second end does not support a specific type of the information, the second capability information indicates that the first end and the second end do not support the type of the information. The second end receives, from the first end, a message carrying indication information of the first type, where the first type of the information is one of the plurality of types of the information.

The first end determines, by using the second capability information, the support status of the second end for the plurality of types of the indication information. Therefore, the first end may determine that the second end supports the first type of the information, and may send, to the second end, the message carrying the indication information of the first type. In this way, consumption of network transmission resources is reduced. In addition, additional overheads caused by a process in which a peer end processes indication information that cannot be processed can also be avoided, and an exception caused by the process in which the peer end processes the indication information that cannot be processed can also be avoided.

In an implementation, the transport layer protocol connection establishment request message is a quick user datagram protocol Internet connection QUIC establishment request message, and the transport layer protocol connection establishment response message is a QUIC establishment response message; or the transport layer protocol connection establishment request message is a multipath MPQUIC establishment request message, and the transport layer protocol connection establishment response message is an MPQUIC establishment response message. The QUIC protocol is a new user datagram protocol (User Datagram Protocol, UDP)-based multiplexed and secure transport protocol, and MPQUIC may be considered as an extended QUIC protocol.

This implementation provides a specific application scenario in which the transport layer protocol is QUIC or MPQUIC.

In an implementation, the indication information is a frame in QUIC or MPQUIC, and the plurality of types of the indication information correspond to a plurality of types of the frame. For example, the frame may be a PADDING frame, a PING frame, or an ACK frame. Correspondingly, the first capability information indicates a support status of the first end for the plurality of types of the frame or indicates a joint support status of the first end and the second end for the plurality of types of the frame, and the second capability information indicates a support status of the second end for the plurality of types of the frame.

When the indication information is QUIC or MPQUIC, the first end and the second end may determine, through capability negotiation, a type of the frame that is supported by the peer end.

In an implementation, the transport layer protocol connection establishment request message is a multipath transmission control protocol MPTCP connection establishment request message, and the transport layer protocol connection establishment response message is an MPTCP connection establishment response message.

This implementation provides a specific application scenario in which the transport layer protocol is MPTCP.

In an implementation, the indication information is an MPTCP option, the MPTCP option includes a kind (Kind) field, a length (Length) field, a subtype (Subtype) field, and a subtype-specific data (Subtype-specific data) field, and a value of the kind field is 30. The plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option or indicates a joint support status of the first end and the second end for the plurality of subtypes of the MPTCP option. The second capability information indicates a support status of the second end for the plurality of subtypes of the MPTCP option. The subtypes of the MPTCP option include MPTCP Capable MP_CAPABLE, Join MPTCP Connection MP_JOIN, Data Sequence Signal DSS, Add Address ADD_ADDR, Remove Address REMOVE_ADDR, Change Subflow Priority MP_PRIO1, Fallback MP_FAIL, Fast Close MP_FASTCLOSE, Subflow Reset MP_TCPRST, and Reserved for Private Use MP_EXPERIMENTAL.

That the second end receives, from the first end, a message carrying indication information of the first type includes: The second end receives, from the first end, a message carrying indication information of the first type, where the first subtype is one of the plurality of subtypes.

When the indication information is MPTCP, the first end and the second end may determine, through capability negotiation, a subtype of the MPTCP option that is supported by the peer end.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In this implementation, no new subtype of the MPTCP option is added, and the first capability information is stored in the first specific data of MPTCP Capable, so that the first capability information is carried in the MPTCP connection establishment request message.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In this implementation, no new subtype of the MPTCP option is added, and the second capability information is stored in the second specific data of MPTCP Capable, so that the second capability information is carried in the MPTCP connection establishment response message.

An MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype, and the extended subtype is obtained by extending a subtype of an MPTCP option that is defined in an existing standard; and the third value of the subtype-specific data field indicates third specific data of the extended subtype, and the third specific data includes the first capability information.

In this implementation, the extended subtype is added, and the first capability information is stored in the specific data field of the extended subtype, so that the first capability information is carried in the MPTCP connection establishment request message.

In an implementation, the MPTCP option in the MPTCP connection establishment request message further includes a version field, and the version field indicates MPTCP version information. A length of the version field is not specifically limited in embodiments of this application, and may be adjusted according to an actual requirement.

A value of the version field in the MPTCP option may indicate specific MPTCP version information, so that the second end can determine, with reference to the MPTCP version information, the support status of the first end for the plurality of subtypes.

In an implementation, the third specific data further includes extended first information, and content of the extended first information may be selected according to an actual requirement.

In this implementation, the extended first information in the third specific data can meet a future expansion requirement.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In this implementation, the extended subtype is added, and the second capability information is stored in the specific data field of the extended subtype, so that the second capability information is carried in the MPTCP connection establishment response message.

In an implementation, the MPTCP option in the MPTCP connection establishment response message further includes a version field, and the version field indicates MPTCP version information.

A value of the version field in the MPTCP option may indicate specific MPTCP version information, so that the first end can determine, with reference to the MPTCP version information, the support status of the second end for the plurality of subtypes.

In an implementation, the fourth specific data further includes extended second information, and content of the extended second information may be selected according to an actual requirement.

In this implementation, the extended second information in the fourth specific data can meet a future expansion requirement.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

In this implementation, the plurality of subtypes may include at least one of the foregoing subtypes, so that the first capability information and the second capability information can meet requirements in various scenarios.

In an implementation, after that the second end sends a transport layer protocol connection establishment response message to the first end, the method further includes: The second end sends, to the first end based on that the first capability information indicates that the first end supports a second type of the indication information, a message carrying indication information of the second type, where the second type of the information is one of the plurality of types of the information.

The second end determines, by using the first capability information, the support status of the first end for the plurality of types of the indication information. Therefore, the second end may determine the second type of the information that is supported by the first end, and may send, to the first end, the message carrying the indication information of the second type. In this way, consumption of network transmission resources is reduced.

A fifth aspect of embodiments of this application provides a data transmission apparatus, applied to a first end and including:
a sending unit, configured to send a transport layer protocol connection establishment request message to a second end, where the transport layer protocol connection establishment request message carries first capability information, and the first capability information indicates a support status of the first end for a plurality of types of indication information; and
a receiving unit, configured to receive, from the second end, a transport layer protocol connection establishment response message for the transport layer protocol connection establishment request message, where the transport layer protocol connection establishment response message carries second capability information, and the second capability information indicates a support status of the second end for the plurality of types of the indication information or indicates a joint support status of the first end and the second end for the plurality of types of the indication information.

The sending unit is further configured to send, to the second end based on that the second capability information indicates that the second end supports a first type of the indication information or indicates that the first end and the second end jointly support the first type of the indication information, a message carrying indication information of the first type, where the first type of the information is one of the plurality of types of the information.

In an implementation, the transport layer protocol connection establishment request message is a quick user datagram protocol Internet connection QUIC establishment request message, and the transport layer protocol connection establishment response message is a QUIC establishment response message; or the transport layer protocol connection establishment request message is a multipath MPQUIC establishment request message, and the transport layer protocol connection establishment response message is an MPQUIC establishment response message.

In an implementation, the transport layer protocol connection establishment request message is a multipath transmission control protocol MPTCP connection establishment request message, and the transport layer protocol connection establishment response message is an MPTCP connection establishment response message.

In an implementation, the indication information is an MPTCP option, the plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option. The second capability information indicates a support status of the second end for the plurality of subtypes of the MPTCP option or indicates a joint support status of the first end and the second end for the plurality of subtypes of the MPTCP option.

The sending unit is configured to send, to the second end based on that the second capability information indicates that the second end supports a first subtype of the MPTCP option or indicates that the first end and the second end jointly support the first subtype of the MPTCP option, a message carrying an MPTCP option of the first subtype, where the first subtype is one of the plurality of subtypes.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In an implementation, an MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype; and the third value of the subtype-specific data field indicates third specific data of the extended subtype, and the third specific data includes the first capability information.

In an implementation, the MPTCP option in the MPTCP connection establishment request message further includes a version field, and the version field indicates MPTCP version information.

In an implementation, the third specific data further includes extended first information.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In an implementation, the MPTCP option in the MPTCP connection establishment response message further includes a version field, and the version field indicates MPTCP version information.

In an implementation, the fourth specific data further includes extended second information.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

In an implementation, the receiving unit is further configured to receive, from the second end, a message carrying indication information of a second type, where the second type of the information is one of the plurality of types of the information.

For specific implementations, related descriptions, and technical effects of the foregoing units, refer to descriptions in the first aspect of embodiments of this application.

A sixth aspect of embodiments of this application provides a data transmission apparatus, applied to a second end and including:
a receiving unit, configured to receive a transport layer protocol connection establishment request message from a first end, where the transport layer protocol connection establishment request message carries first capability information, and the first capability information indicates a support status of the first end for a plurality of types of indication information; and a sending unit, configured to send a transport layer protocol connection establishment response message to the first end in response to the transport layer protocol connection establishment request message, where the transport layer protocol connection establishment response message carries second capability information, and the second capability information indicates a support status of the second end for the plurality of types of the indication information or indicates a joint support status of the first end and the second end for the plurality of types of the indication information, where the receiving unit is configured to receive, from the first end, a message carrying indication information of the first type, where the first type of the information is one of the plurality of types of the information.

In an implementation, the transport layer protocol connection establishment request message is a quick user datagram protocol Internet connection QUIC establishment request message, and the transport layer protocol connection establishment response message is a QUIC establishment response message; or
the transport layer protocol connection establishment request message is a multipath MPQUIC establishment request message, and the transport layer protocol connection establishment response message is an MPQUIC establishment response message.

In an implementation, the transport layer protocol connection establishment request message is a multipath transmission control protocol MPTCP connection establishment request message, and the transport layer protocol connection establishment response message is an MPTCP connection establishment response message.

In an implementation, the indication information is an MPTCP option, the plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option. The second capability information indicates a support status of the second end for the plurality of subtypes of the MPTCP option or indicates a joint support status of the first end and the second end for the plurality of subtypes of the MPTCP option. The receiving unit is configured to receive, from the first end, a message carrying indication information of the first type, where the first subtype is one of the plurality of subtypes.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In an implementation, an MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype; and the third value of the subtype-specific data field indicates third specific data of the extended subtype, and the third specific data includes the first capability information.

In an implementation, the MPTCP option in the MPTCP connection establishment request message further includes a version field, and the version field indicates MPTCP version information.

In an implementation, the third specific data further includes extended first information.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In an implementation, the MPTCP option in the MPTCP connection establishment response message further includes a version field, and the version field indicates MPTCP version information.

In an implementation, the fourth specific data further includes extended second information.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

In an implementation, the second capability information indicates the joint support status of the first end and the second end for the plurality of subtypes of the MPTCP option. The apparatus further includes: a determining unit, configured to determine the second capability information based on the first capability information and third capability information, where the third capability information indicates a support status of the second end for the plurality of types of the indication information.

In an implementation, the sending unit is further configured to send, to the first end based on that the first capability information indicates that the first end supports a second type of the indication information, a message carrying indication information of the second type, where the second type of the information is one of the plurality of types of the information.

For specific implementations, related descriptions, and technical effects of the foregoing units, refer to descriptions in the second aspect of embodiments of this application.

A seventh aspect of embodiments of this application provides a computer device. The computer device is a terminal or a server and includes one or more processors and a memory. The memory stores computer-readable instructions, and the one or more processors read the computer-readable instructions, to enable the computer device to implement the method according to any one of the implementations of the first aspect to the fourth aspect.

An eighth aspect of embodiments of this application provides a computer-readable storage medium, including computer-readable instructions. When the computer-readable instructions are run on a computer, the computer is enabled to perform the method according to any one of the implementations of the first aspect to the fourth aspect.

A ninth aspect of embodiments of this application provides a chip, including one or more processors. Some or all of the processors are configured to read and execute a computer program stored in a memory, to perform the method according to any one of the possible implementations of the first aspect to the fourth aspect.

Optionally, the chip includes the memory, and the memory and the processor are connected to the memory by using a circuit or a wire. Further, optionally, the chip system further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

A tenth aspect of embodiments of this application provides a computer program product. The computer program product includes computer software instructions, and the computer software instructions may be loaded by a processor to implement the method according to any one of the implementations of the first aspect to the fourth aspect.

It can be learned from the foregoing technical solutions that embodiments of this application have the following advantages:
The first end sends the transport layer protocol connection establishment request message to the second end. The transport layer protocol connection establishment request message carries the first capability information, the first capability information indicates the support status of the first end for the plurality of types of the indication information, and the support status may be supporting or not supporting. The first end receives, from the second end, the transport layer protocol connection establishment response message for the transport layer protocol connection establishment request message. The transport layer protocol connection establishment response message carries the second capability information, and the second capability information indicates the support status of the second end for the plurality of types of the indication information or indicates the joint support status of the first end and the second end for the plurality of types of the indication information. The first end sends, to the second end based on that the second capability information indicates that the second end supports the first type of the indication information or indicates that the first end and the second end jointly support the first type of the indication information, the message carrying the indication information of the first type, where the first type of the information is one of the plurality of types of the information. The first end determines, by using the second capability information, the support status of the second end for the plurality of types of the indication information. Therefore, the first end may determine that the second end supports the first type of the information, and may send, to the second end, the message carrying the indication information of the first type. In this way, sending, to the second end, indication information of a type not supported by the second end is avoided, to reduce consumption of network transmission resources by the indication information of the type not supported by the second end. In addition, additional overheads caused by a process in which the peer end processes indication information that cannot be processed can also be avoided, and an exception caused by the process in which the peer end processes the indication information that cannot be processed can also be avoided.

### BRIEF DESCRIPTION OF DRAWINGS

FIG. 1 is an architectural diagram of a communication system according to an embodiment of this application;
FIG. 2 is a schematic diagram of a process of establishing an MPTCP session according to an embodiment of this application;
FIG. 3 is a schematic diagram of an embodiment of establishing an MPTCP session between a terminal and a server;
FIG. 4 is a schematic diagram of an MPTCP protocol stack according to an embodiment of this application;
FIG. 5 is a schematic structural diagram of a first embodiment of a TCP header option according to an embodiment of this application;
FIG. 6 is a schematic structural diagram of an MPTCP option according to an embodiment of this application;
FIG. 7 is a schematic structural diagram of a communication system according to an embodiment of this application;
FIG. 8 is a schematic diagram of an embodiment of a data transmission method according to an embodiment of this application;
FIG. 9 is a schematic structural diagram of a second embodiment of an MPTCP option according to an embodiment of this application;
FIG. 10 is a schematic structural diagram of a third embodiment of an MPTCP option according to an embodiment of this application;
FIG. 11 is a schematic structural diagram of a fourth embodiment of an MPTCP option according to an embodiment of this application;
FIG. 12 is a schematic structural diagram of a fifth embodiment of an MPTCP option according to an embodiment of this application;
FIG. 13 is a schematic diagram of an application example of a data transmission method according to an embodiment of this application;
FIG. 14 is a schematic diagram of a first embodiment of a data transmission apparatus according to an embodiment of this application;
FIG. 15 is a schematic diagram of a second embodiment of a data transmission apparatus according to an embodiment of this application; and
FIG. 16 is a schematic diagram of an embodiment of a terminal device according to an embodiment of this application.

### DESCRIPTION OF EMBODIMENTS

Embodiments of this application provide a data transmission method, a device, and a computer-readable storage medium, to reduce consumption of network transmission resources.

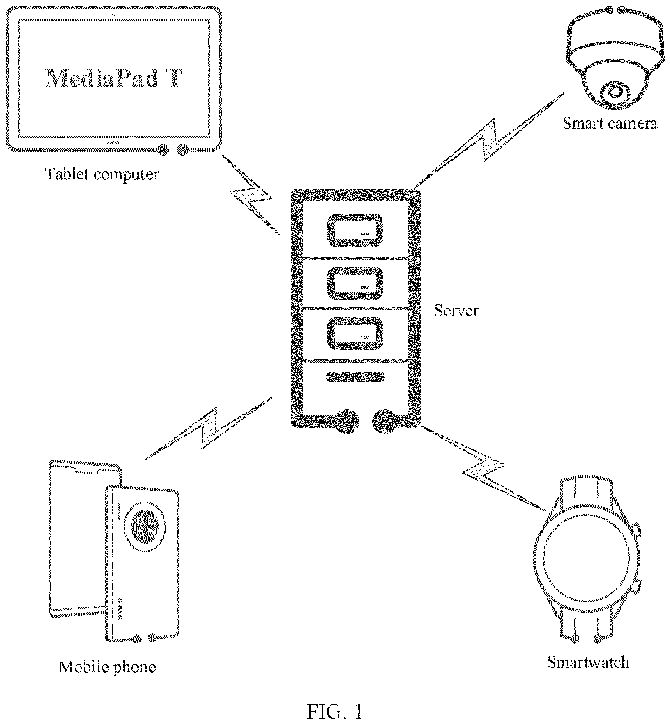

Embodiments of this application may be applied to a communication system shown in FIG. 1. As shown in FIG. 1, the communication system includes a terminal device and a server.

The terminal device may also be referred to as a terminal for short, and includes but is not limited to a mobile phone (Mobile Phone), a tablet computer (Pad), a computer having a transceiver function, a virtual reality (Virtual Reality, VR) terminal device, an augmented reality (Augmented Reality, AR) terminal device, a wireless terminal in industrial control (Industrial Control), a wireless terminal in self-driving (Self Driving), a wireless terminal in telemedicine (Remote Medical), a wireless terminal in a smart grid (Smart Grid), a wireless terminal in transportation security (Transportation Safety), a wireless terminal in a smart city (Smart City), a wireless terminal in a smart home (Smart Home), a wearable device, or a vehicle-mounted device. FIG. 1 shows only terminals such as a tablet computer, a mobile phone, a smart camera, and a smartwatch.

In embodiments of this application, the terminal and the server transmit data based on a transport layer protocol. There may be a plurality of transport layer protocols. This is not specifically limited in embodiments of this application. For example, the transport layer protocol may be the quick user datagram protocol Internet connection (Quick UDP Internet Connection, QUIC) protocol, or may be the multipath MPQUIC protocol, or may be the multipath transmission control protocol (Multi Path Transmission Control Protocol, MPTCP).

The following describes the QUIC protocol and the MPQUIC protocol.

The QUIC protocol is a new user datagram protocol (User Datagram Protocol, UDP)-based multiplexed and secure transport protocol, is designed to optimize syntax of the hypertext transfer protocol HTTP/2, and uses HTTP/2 as a main application layer protocol during design. The QUIC protocol provides equivalent HTTP/2 multiplexing, flow control, equivalent transport layer security (Transport Layer Security, TLS)-based secure transmission, and transmission control protocol (Transmission Control Protocol, TCP)-based congestion control.

A QUIC protocol message may carry different frames (frames). For example, the QUIC protocol message may carry one or more of the following 21 types of frames:
a PADDING frame, a PING frame, an ACK frame, a RESET_STREAM frame, a STOP_SENDING frame, a CRYPTO frame, a NEW_TOKEN frame, a STREAM frame, a MAX_DATA frame, a MAX_STREAM_DATA frame, a MAX_STREAMS frame, a DATA_BLOCKED frame, a STREAM_DATA_BLOCKED frame, a STREAMS_BLOCKED frame, a NEW_CONNECTION_ID frame, a RETIRE_CONNECTION_ID frame, a PATH_CHALLENGE frame, a PATH_RESPONSE frame, a CONNECTION_CLOSE frame, a HANDSHAKE_DONE frame, and an Extension frame.

The MPQUIC protocol may be considered as an extended protocol of the QUIC protocol. In addition to the foregoing 21 types of frames, an MPQUIC protocol message may further cany one or more of the following six types of frames:
an MP_NEW_CONNECTION_ID frame, an MP_RETIRE_CONNECTION_ID frame, an MP_ACK frame, an ADD_ADDRESS frame, a REMOVE_ADDRESS frame, and a UNIFLOWS frame.

Different frames have different indication functions. Therefore, each type of frame may be considered as one type of indication information. For example, the ACK frame indicates a received data packet and a processed data packet, and the CONNECTION_CLOSE frame indicates that a connection is to be closed.

The following describes MPTCP.

MPTCP is an extended protocol of TCP, and allows a terminal and a server to transmit data of one MPTCP session through a plurality of subchannels.

The data of the MPTCP session is also referred to as a TCP packet or a message Message. The following uses a message to describe embodiments of this application.

A subchannel may also be referred to as a subflow or a sub-link. The subchannel is a bidirectional channel, and one subflow corresponds to one TCP connection. Usually, a subchannel is identified by using a 5-tuple: a source Internet protocol address (Internet Protocol Address, IP), a destination IP address, a source port, a destination port, and a protocol type.

Either the terminal or the server may have one or more IPs. For example, the terminal and the server each may have an Internet protocol version 4 IPV4 address and an Internet protocol version 6 IPV6 address. For another example, the terminal and the server each may have an IP corresponding to a wireless network interface card and an IP corresponding to a wired network interface card. It should be noted that a case in which the terminal and the server each have a plurality of IPs is not limited to the foregoing two cases.

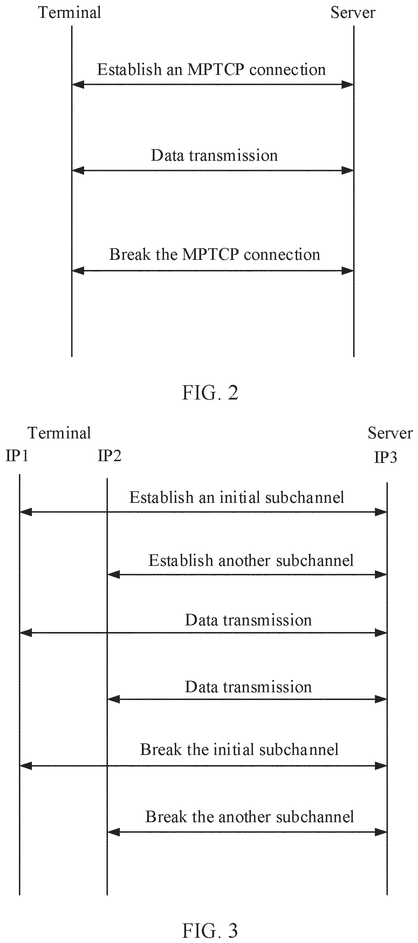

As shown in FIG. 2, a process in which the terminal and the server establish an MPTCP session includes:
The terminal and the server first establish an MPTCP connection, then transmit data based on the established MPTCP connection, and break the MPTCP connection after the data is completely transmitted.

A process in which the terminal and the server first establish the MPTCP connection includes:
The terminal and the server first establish an initial subchannel through a three-way handshake, and then establish at least one subchannel. Except the initial subchannel, other subchannels need to be established all through a four-way handshake.

For example, as shown in FIG. 3, the terminal has IP1 and IP2, and the server has IP3. A process of establishing an MPTCP connection includes: The terminal and the server establish an initial subchannel between IP1 and IP3 through a three-way handshake, and then establish another subchannel between IP2 and IP3 through a four-way handshake. In this case, the MPTCP connection is established.

In this way, in an MPTCP session, data may be transmitted through the initial subchannel between IP1 and IP3 and the subchannel between IP2 and IP3. After the data is completely transmitted, the initial subchannel between IP1 and IP3 and the subchannel between IP2 and IP3 are broken.

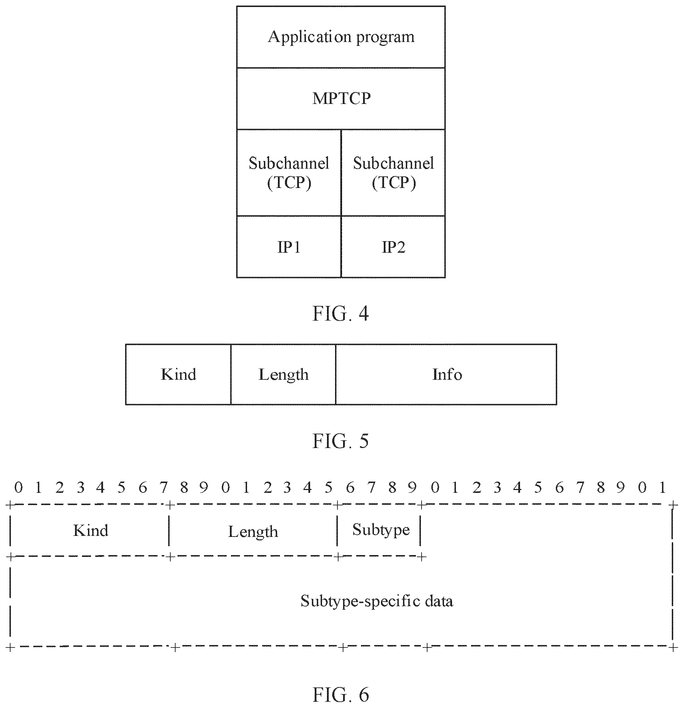

The following describes an MPTCP protocol stack with reference to FIG. 4. FIG. 4 is a schematic diagram of an embodiment of the MPTCP protocol stack.

The terminal and the server shown in FIG. 3 are used as an example. As shown in FIG. 4, an MPTCP layer is located between a TCP layer and an application program. The TCP layer includes two subchannels that correspond to IP1 and IP2. In an MPTCP session, the application program may transmit data through the two subchannels at the TCP layer.

It should be noted that, because only two subchannels can be established between the terminal and the server in FIG. 3, the TCP layer in the MPTCP protocol stack shown in FIG. 4 includes two subchannels. If three or more subchannels are established between the terminal and the server, the TCP layer in the MPTCP protocol stack also correspondingly includes three or more subchannels.

The following describes a data transmission process in an MPTCP session.

If a plurality of subchannels are established between the terminal and the server, the plurality of subchannels may be used to transmit data in parallel; or at least one subchannel may be selected as a primary subchannel, data is transmitted through the primary subchannel, and other subchannels are used as standby subchannels; or two or more subchannels may be selected as primary subchannels, and other subchannels are used as standby subchannels.

FIG. 3 is used as an example. Data may be transmitted through both the initial subchannel between IP1 and IP3 and the subchannel between IP2 and IP3, or data may be transmitted only through the initial subchannel between IP1 and IP3, and the subchannel between IP2 and IP3 is used as a standby subchannel.

Based on the foregoing descriptions, it can be learned that data of an MPTCP session is transmitted by using a TCP packet. The TCP packet includes a TCP header option. A structure of the TCP header option is shown in FIG. 5. Specifically, the TCP header option includes a kind (Kind) field, a length (Length) field, and an information (info) field.

The kind field indicates a type of the TCP header option, and usually occupies 1 byte. There may be a plurality of values of the kind field. When the value of the kind field is 30, it indicates that the current TCP header option is an MPTCP header option, which may also be referred to as an MPTCP option for short. In the MPTCP session, the TCP packet usually carries an MPTCP option with a value of a kind field being 30, to identify that the TCP packet is an MPTCP packet.

A specific structure of the MPTCP option is defined in an existing standard. As shown in FIG. 6, the MPTCP option includes a kind (Kind) field, a length (Length) field, a subtype (Subtype) field, and a subtype-specific data (Subtype-specific data) field, where a value of the kind field is 30. Values 0 to 9 in FIG. 6 are separately used to mark binary bits. Binary bits occupied by the kind field in FIG. 6 are 0 to 7, and there are 8 binary bits in total, that is, 1 byte.

It can be learned by comparing FIG. 5 and FIG. 6 that, in the MPTCP option, it is equivalent to specifically dividing the information (info) field into the subtype (Subtype) field and the subtype-specific data (Subtype-specific data) field.

The length field indicates a length of the MPTCP option. A value of the length field is jointly determined based on the kind field, the length field, the subtype field, and the subtype-specific data field, and usually also occupies 1 byte.

The subtype field indicates a subtype of the MPTCP option. A plurality of subtypes of the MPTCP option are defined in the existing standard, and different values of the subtype field indicate different subtypes, that is, indicate different MPTCP options. The plurality of subtypes of the MPTCP option are shown in Table 1 below.

**Table 1**

| Subtype | Meaning | MPTCPv0 | MPTCPv1 |
|---|---|---|---|
| MP_CAPABLE | MPTCP capable | Supported | Supported |
| MP_JOIN | Join MPTCP Connection | Supported | Supported |
| DSS | Data Sequence Signal | Supported | Supported |
| ADD_ADDR | Add Address | Supported | Supported |
| REMOVE_ADDR | Remove Address | Supported | Supported |
| MP_PRIO | Change Subflow Priority | Supported | Supported |
| MP_FAIL | Fallback | Supported | Supported |
| MP_FASTCLOSE | Fast Close | Supported | Supported |
| MP_TCPRST | Subflow Reset | / | Supported |
| MP_EXPERIMENTAL | Reserved for Private Use | / | Supported |

As shown in the foregoing Table 1, the plurality of subtypes of the MPTCP option include MPTCP Capable MP_CAPABLE, Join MPTCP Connection MP_JOIN, Data Sequence Signal DSS, Add Address ADD_ADDR, Remove Address REMOVE _ADDR, Change Subflow Priority MP_PRIO1, Fallback MP_FAIL, Fast Close MP_FASTCLOSE, Subflow Reset MP_TCPRST, and Reserved for Private Use MP_EXPERIMENTAL.

In the foregoing Table 1, MPTCPvO and MPTCPvl indicate MPTCPs of different versions. It can be learned by comparing the subtype corresponding to MPTCPvO and the subtype corresponding to MPTCPvl that, in MPTCPv0, the subtypes of the MPTCP option do not include Subflow Reset MP_TCPRST and Reserved for Private Use MP_EXPERIMENTAL, while in MPTCPv1, the subtypes of the MPTCP option include Subflow Reset MP_TCPRST, and Reserved for Private Use MP_EXPERIMENTAL.

The subtype-specific data field indicates specific data of a subtype. The specific data of the corresponding subtype varies with the subtype.

It should be noted that, the MPTCP option occupies a maximum of 40 bytes, and the kind field and the length field usually each occupy 1 byte. Therefore, the subtype field and the subtype-specific data field may occupy a maximum of 38 bytes.

Based on the plurality of subtypes shown in Table 1, TCP packets sent by the terminal and the server usually include subtypes of MPTCP options, and the subtype of the MPTCP option in the TCP packet is related to an operation actually to be implemented based on the TCP packet.

For example, in a process of establishing an initial subchannel, a subtype of an MPTCP option in a TCP packet is MPTCP Capable; and in a process of establishing another subchannel after the initial subchannel is established, a subtype of an MPTCP option in a TCP packet is Join MPTCP Connection.

Based on the foregoing descriptions of the QUIC protocol and MPTCP, it can be learned that a frame in QUIC may be considered as one type of indication information, and correspondingly, a type of the frame in QUIC may be considered as a type of the indication information. The MPTCP option may also be considered as one type of indication information, and correspondingly, the subtype of the MPTCP option may be considered as a type of the indication information.

However, not all terminals and servers are capable of processing all types of indication information.

MPTCP is used as an example. Not all terminals and servers are capable of processing MPTCP options corresponding to all the subtypes shown in Table 1. In addition, in a current data transmission process, the terminal and the server do not perform capability negotiation before data transmission. To be specific, the terminal cannot determine whether the server is capable of processing a data packet in which a subtype of an MPTCP option is a specific subtype, and the server cannot determine whether the terminal is capable of processing a data packet in which a subtype of an MPTCP option is a specific subtype either.

As a result, either the terminal or the server sends, to a peer end according to a requirement of the terminal or the server, a data packet in which a subtype of an MPTCP option is a specific subtype. After the peer end receives the data packet in which the subtype of the MPTCP option is the specific subtype, if the peer end finds that the peer end is incapable of processing the data packet in which the subtype of the MPTCP option is the specific subtype, the peer end discards the data packet in which the subtype of the MPTCP option is the specific subtype.

It can be learned that, in a data transmission process, the terminal or the server may send an invalid data packet to the peer end, and the invalid data packet consumes network bandwidth, increasing overheads of processing the invalid data packet by the terminal or the server.

It may be understood that discarding, by the peer end, the data packet in which the subtype of the MPTCP option is the specific subtype may cause discarding of some necessary data, and therefore, an exception may be caused. In addition, if the peer end finds that the peer end is incapable of processing the data packet in which the subtype of the MPTCP option is the specific subtype, the peer end may further identify the data packet as an offensive malicious data packet, and process the data packet in a manner of processing a malicious data packet. This may also cause an exception.

In view of this, embodiments of this application provide a data transmission method. In the method, a terminal and a server perform capability negotiation in a process of establishing an MPTCP connection, so that the terminal determines a type of indication information that the server is capable of processing, and the server determines the type of the indication information that the terminal is capable of processing.

In this way, a message sent by the terminal or the server to a peer end may not carry indication information of a type that cannot be processed by the peer end. In this way, consumption of network transmission resources is reduced. In addition, additional overheads caused by a process in which the peer end processes the indication information that cannot be processed can also be avoided, and an exception caused by the process in which the peer end processes the indication information that cannot be processed can also be avoided.

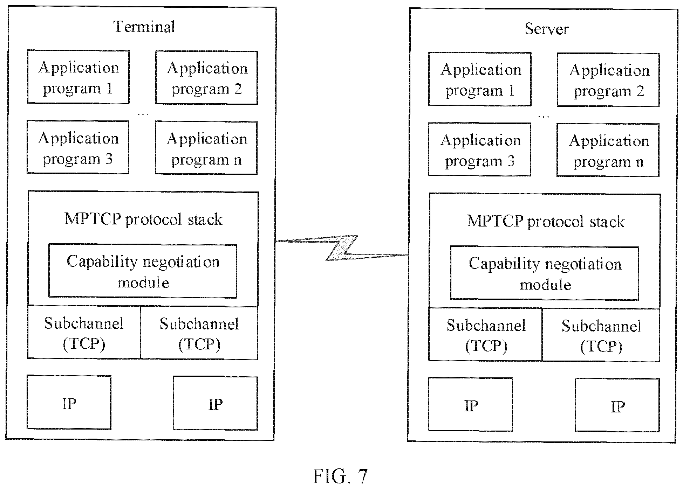

MPTCP is used as an example. As shown in FIG. 7, n application programs are deployed in each of the terminal and the server, each of the terminal and the server has two IPs, and two subchannels in an MPTCP protocol stack may be established based on the two IPs. In addition, an MPTCP protocol stack of the terminal and an MPTCP protocol stack of the server each include a capability negotiation module. The capability negotiation module is configured to perform capability negotiation between the terminal and the server in a process of establishing an MPTCP connection.

Based on the capability negotiation in the process of establishing the MPTCP connection, both the terminal and the server may determine whether the peer end is capable of processing a data packet in which a subtype of an MPTCP option is a specific subtype. If the peer end is capable of processing the data packet in which the subtype of the MPTCP option is the specific subtype, the terminal or the server may send, to the peer end in a data transmission process, the data packet in which the subtype of the MPTCP option is the specific subtype. If the peer end is incapable of processing the data packet in which the subtype of the MPTCP option is the specific subtype, the terminal or the server does not send, to the peer end, the data packet in which the subtype of the MPTCP option is the specific subtype. In this way, consumption of network bandwidth by an invalid data packet (a data packet that cannot be processed) can be avoided, additional overheads caused by a process in which the terminal and the server processes the invalid data packet can be avoided, and an exception caused by the process of processing the invalid data packet can be avoided.

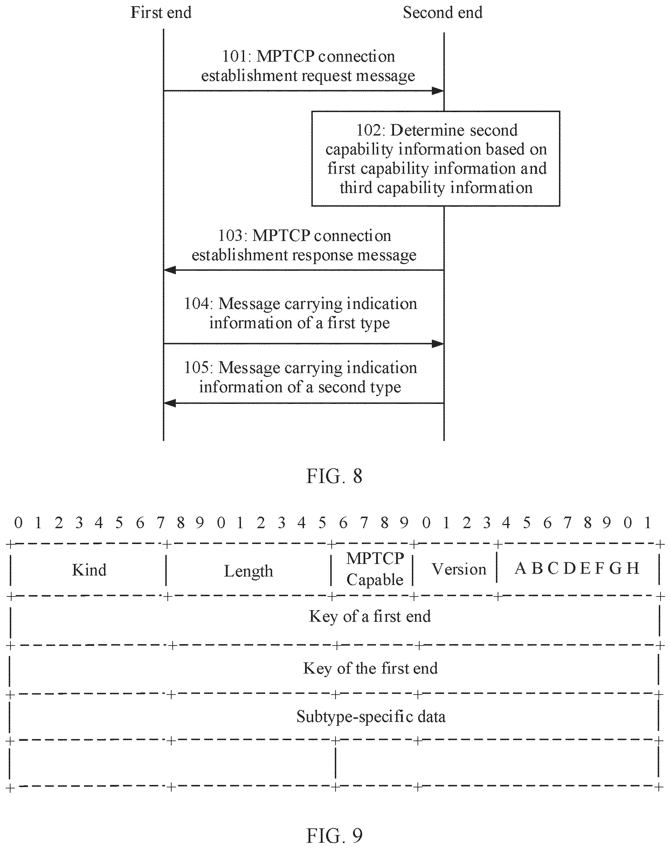

The following specifically describes a data transmission method provided in an embodiment of this application with reference to FIG. 8. For ease of description, a packet is replaced with a message below.

Specifically, as shown in FIG. 8, embodiments of this application provide an embodiment of a data transmission method, including the following steps.

Step 101: A first end sends a transport layer protocol connection establishment request message to a second end, where the transport layer protocol connection establishment request message carries first capability information, and the first capability information indicates a support status of the first end for a plurality of types of indication information.

The first end may be either of a terminal and a server, and correspondingly, the second end is the other one of the terminal and the server that is different from the first end.

The transport layer protocol connection establishment request message may be a quick user datagram protocol Internet connection QUIC establishment request message, the transport layer protocol connection establishment request message may be a multipath MPQUIC establishment request message, or the transport layer protocol connection establishment request message is a multipath transmission control protocol MPTCP connection establishment request message.

It should be noted that, the indication information is not specifically limited in this embodiment of this application, and the indication information may be any data having the indication information.

When the transport layer protocol connection establishment request message is the quick user datagram protocol Internet connection QUIC establishment request message, the first capability information indicates a support status of the first end for a plurality of types of a frame. In this case, the frame may be considered as one type of indication information.

When the transport layer protocol connection establishment request message is the MPTCP connection establishment request message, the indication information is an MPTCP option, the plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option.

Correspondingly, step 101 includes:
The first end sends the multipath transmission control protocol MPTCP connection establishment request message to the second end, where the MPTCP connection establishment request message carries the first capability information, and the first capability information indicates the support status of the first end for the plurality of subtypes of the MPTCP option.

The MPTCP connection establishment request message may be understood as a TCP connection establishment request message including an MPTCP option. Specifically, in this embodiment of this application, the MPTCP connection establishment request message refers to a TCP connection establishment request message sent for establishing the first subchannel (which may also be referred to as an initial subchannel) in an MPTCP session.

It can be learned from the foregoing Table 1 that there may be a plurality of subtypes of the MPTCP option. In this embodiment of this application, the first capability information may indicate a support status of the first end for the subtypes in Table 1.

Therefore, in an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

Specifically, based on the foregoing descriptions, it can be learned that when MPTCP is MPTCPv0, the plurality of subtypes may include at least one of MPTCP Capable, Join MPTCP Connection, Data Acknowledgment Character and Data Sequence Mapping, Add Address, Remove Address, Change Subflow Priority, Fallback, and Fast Close; or when MPTCP is MPTCPv1, the plurality of subtypes may include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

It may be understood that, in some scenarios, based on a requirement of functions of the two ends, the plurality of subtypes may include only one or more of the foregoing subtypes. For example, in some scenarios, the two ends only need to determine that a peer end has a capability of establishing an MPTCP connection and a capability of joining an MPTCP connection. Therefore, the plurality of subtypes may include only MPTCP Capable and Join MPTCP Connection.

In addition, as new subtypes are gradually defined in a future standard, the first capability information may also indicate a support status of the first end for the new subtypes in the future.

A form of the first capability information is not specifically limited in this embodiment of this application, and may be adjusted according to an actual requirement.

For example, the first capability information may include only information about some of the plurality of subtypes, to indicate that the first end supports a subtype included in the first capability information and does not support a subtype that is not included in the first capability information. The 10 subtypes shown in Table 1 are used as an example. The first capability information includes only six of the subtypes, to indicate that the first end supports the six subtypes included in the first capability information, but does not support the four subtypes that are not included in the first capability information.

For example, the first capability information may include information about all of the plurality of subtypes, and specifically indicate a supported subtype and an unsupported subtype. The 10 subtypes shown in Table 1 are used as an example. The first capability information includes information about the 10 subtypes, and specifically indicates that the first end supports six of the subtypes but does not support the remaining four subtypes.

It may be understood that, if the first capability information may include only the information about some of the plurality of subtypes, for the terminal and the server that have different capabilities, a length of the first capability information is not fixed. In contrast, if the first capability information includes the information about all of the plurality of subtypes, for any terminal and server, a length of the first capability information is fixed, thereby facilitating management.

When the first capability information includes the information about all of the plurality of subtypes, the first capability information may be in a plurality of forms. This is not specifically limited in this embodiment of this application.

In an implementation, in correspondence to the plurality of subtypes, the first capability information may be a binary character string, and each subtype corresponds to one binary bit. For example, a binary number 0 indicates that the subtype is not supported, and a binary number 1 indicates that the subtype is supported. Specifically, when MPTCP is MPTCPv1, the plurality of subtypes include MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use. Correspondingly, the first capability information may include 1111110000. The first capability information indicates that the first end supports subtypes such as MPTCP Capable, Join MPTCP Connection, Data Acknowledgment Character and Data Sequence Mapping, Add Address, Remove Address, and Change Subflow Priority, and does not support subtypes such as Fast Close, Subflow Reset, and Reserved for Private Use.

A location of the first capability information in the MPTCP connection establishment request message is not specifically limited in this embodiment of this application, and may be adjusted according to an actual requirement. For example, the first capability information may be included in the MPTCP option in the MPTCP connection establishment request message, and may be specifically included in any one or more possible fields in the MPTCP option. The following describes the location of the first capability information in the MPTCP connection establishment request message with reference to FIG. 9 to FIG. 12.

In this embodiment of this application, if the first end supports a specific subtype, it means that the first end is capable of processing a message in which a subtype of an MPTCP option is the specific subtype.

For example, to implement data transmission between the first end and the second end, an MPTCP connection needs to be first established. Therefore, the first end and the second end each need to have a capability of establishing an MPTCP connection. Therefore, in this embodiment of this application, the first capability information needs to indicate that the first end supports the subtype of the MPTCP option, namely, MPTCP Capable.

Similarly, to implement simultaneous data transmission between the first end and the second end through a plurality of subchannels, an initial subchannel needs to be first established in a process of establishing the MPTCP connection, and then at least one subchannel is joined. Because the at least one subchannel needs to be joined, the first end and the second end each need to have a capability of joining an MPTCP connection. Therefore, in this embodiment of this application, the first capability information may further indicate that the first end supports the subtype of the MPTCP option, namely, Join MPTCP Connection.

It may be understood that, before performing step 101, the first end may first read the first capability information locally, and then include the first capability information in the MPTCP connection establishment request message

After step 101 is performed, correspondingly, the second end receives the transport layer protocol connection establishment request message from the first end, where the transport layer protocol connection establishment request message carries the first capability information, and the first capability information indicates the support status of the first end for the plurality of types of the indication information.

When the transport layer protocol connection establishment request message is the MPTCP connection establishment request message, after step 101 is performed, the second end receives the multipath transmission control protocol MPTCP connection establishment request message from the first end, where the MPTCP connection establishment request message carries the first capability information, and the first capability information indicates the support status of the first end for the plurality of subtypes of the MPTCP option.

After receiving the first capability information, the second end may determine the support status of the first end for the plurality of subtypes of the MPTCP option, that is, the second end may obtain a capability of the first end.

Step 102: The second end determines second capability information based on the first capability information and third capability information, where the third capability information indicates a support status of the second end for the plurality of types of the indication information.

The second capability information indicates a joint support status of the first end and the second end for the plurality of types of the indication information. The joint support status may be understood as that when the first end and the second end both support a specific type of the information, the second capability information indicates that the first end and the second end jointly support the type of the information, and when at least one of the first end and the second end does not support a specific type of the information, the second capability information indicates that the first end and the second end do not support the type of the information.

When the transport layer protocol connection establishment request message is the MPTCP connection establishment request message, step 102 includes:
The second end determines the second capability information based on the first capability information and the third capability information, where the third capability information indicates a support status of the second end for the plurality of subtypes of the MPTCP option.

The second capability information indicates a joint support status of the first end and the second end for the plurality of subtypes. The joint support status may be understood as that when the first end and the second end both support a specific subtype, the second capability information indicates that the first end and the second end jointly support the specific subtype, and when at least one of the first end and the second end does not support a specific subtype, the second capability information indicates that the first end and the second end do not support the specific subtype.

For example, the 10 subtypes from top to bottom in the foregoing Table 1 correspond to 10 binary bits. A value 1 of the binary bit indicates that the subtype is supported, and a value 0 of the binary bit indicates that the subtype is not supported. If the first capability information is 1111100001, it indicates that the first end supports the first five subtypes and the last subtype in the table, but does not support the remaining four subtypes in Table 1. If the third capability information is 1111110000, it indicates that the second end supports the first six subtypes in Table 1 and does not support the last four subtypes in Table 1. In this case, the second capability information obtained based on the first capability information and the third capability information is 1111100000, indicating that the first end and the second end jointly support the first five subtypes in Table 1, but the first end and the second end do not support the last five subtypes in Table 1.

It should be noted that, step 102 needs to be performed before the second end sends the transport layer protocol connection establishment request message to the first end, and step 102 needs to be performed only when the second capability information indicates the joint support status of the first end and the second end for the plurality of types of the information.

Therefore, in this embodiment of this application, step 102 is optional.

Step 103: The second end sends a transport layer protocol connection establishment response message to the first end in response to the transport layer protocol connection establishment request message, where the transport layer protocol connection establishment response message carries the second capability information, and the second capability information indicates a support status of the second end for the plurality of types of the indication information or indicates the joint support status of the first end and the second end for the plurality of types of the indication information.

The transport layer protocol connection establishment response message may be a QUIC establishment response message, the transport layer protocol connection establishment response message may be an MPQUIC establishment response message, or the transport layer protocol connection establishment response message may be an MPTCP connection establishment response message.

When the transport layer protocol connection establishment response message is the QUIC establishment response message, the second capability information indicates a support status of the second end for the plurality of types of the frame. In this case, the frame may be considered as one type of indication information, and the type of the frame corresponds to a type of the information.

When the transport layer protocol connection establishment response message is the MPTCP connection establishment response message, the second capability information indicates a support status of the second end for the plurality of subtypes of the MPTCP option or indicates a joint support status of the first end and the second end for the plurality of subtypes of the MPTCP option.

Correspondingly, step 103 includes:
The second end sends the MPTCP connection establishment response message to the first end in response to the MPTCP connection establishment request message, where the MPTCP connection establishment response message carries the second capability information, and the second capability information indicates the support status of the second end for the plurality of subtypes or indicates the joint support status of the first end and the second end for the plurality of subtypes.

Similar to step 101, the MPTCP connection establishment response message may include an MPTCP option, and may further include the second capability information. The second capability information may indicate the support status of the second end for the plurality of subtypes. In this case, step 102 does not need to be performed before step 103. Before step 103 is performed, the second end may first read the second capability information locally, and then include the second capability information in the MPTCP connection establishment response message. The second capability information may alternatively indicate the joint support status of the first end and the second end for the plurality of subtypes. In this case, step 102 needs to be performed before step 103. For details, refer to related descriptions of step 102 for understanding.

The second capability information is similar to the first capability information. For details, refer to related descriptions of the first capability information in step 101 to understand the second capability information.

It can be learned from related descriptions of step 101 that, to implement data transmission between the first end and the second end, the MPTCP connection needs to be first established. Correspondingly, the first end and the second end each need to have the capability of establishing the MPTCP connection. Therefore, in this embodiment of this application, the second capability information may indicate that the second end supports the subtype of the MPTCP option, namely, MPTCP Capable, or indicate that the first end and the second end jointly support the subtype of the MPTCP option, namely, MPTCP Capable.

Similarly, to implement simultaneous data transmission between the first end and the second end through the plurality of subchannels, the initial subchannel needs to be first established in the process of establishing the MPTCP connection, and then the at least one subchannel is joined. Because the at least one subchannel needs to be joined, the first end and the second end each need to have the capability of joining the MPTCP connection. Therefore, in this embodiment of this application, the second capability information may further indicate that the second end supports the subtype of the MPTCP option, namely, Join MPTCP Connection, or indicate that the first end and the second end jointly support the subtype of the MPTCP option, namely, Join MPTCP Connection.

After step 103 is performed, correspondingly, the first end receives, from the second end, the transport layer protocol connection establishment response message for the transport layer protocol connection establishment request message. The transport layer protocol connection establishment response message carries the second capability information, and the second capability information indicates the support status of the second end for the plurality of types of the indication information or indicates the joint support status of the first end and the second end for the plurality of types of the indication information.

When the transport layer protocol connection establishment response message is the MPTCP connection establishment response message, after step 103 is performed, the first end receives, from the second end, the MPTCP connection establishment response message for the MPTCP connection establishment request message. The MPTCP connection establishment response message carries the second capability information, and the second capability information indicates a support status of the second end for the plurality of subtypes or indicates a joint support status of the first end and the second end for the plurality of subtypes.

It should be noted that, a two-way handshake between the first end and the second end may be completed by performing step 101 and step 103. However, the process of establishing the MPTCP connection requires a three-way handshake between the first end and the second end. Therefore, the first end further needs to send an acknowledgment message to the second end. Because the three-way handshake is a mature technology, details are not described herein.

When the transport layer protocol connection establishment request message is the MPTCP connection establishment request message, after the first end sends the acknowledgment message to the second end, an MPTCP connection is established between the first end and the second end (that is, an initial subchannel is obtained). Therefore, the first end and the second end further need to establish at least one MPTCP connection (to add at least one subchannel), and in a process of establishing the at least one MPTCP connection, the first capability information and the second capability information do not need to be sent. Because joining the at least one MPTCP connection based on the established MPTCP connection is a mature technology, details are not described herein.

After the process of establishing the MPTCP connection between the first end and the second end ends, step 104 and step 105 may be performed, to implement data transmission between the first end and the second end.

Step 104: The first end sends, to the second end based on that the second capability information indicates that the second end supports a first type of the indication information or indicates that the first end and the second end jointly support the first type of the indication information, a message carrying indication information of the first type, where the first type of the information is one of the plurality of types of the information.

When the plurality of subtypes of the MPTCP option correspond to the plurality of types of the indication information, step 104 includes:
The first end sends, to the second end based on that the second capability information indicates that the second end supports a first subtype or indicates that the first end and the second end jointly support the first subtype, a message in which a subtype of an MPTCP option is the first subtype, where the first subtype is one of the plurality of subtypes.

It may be understood that, if the second capability information indicates that the second end supports the first subtype, it means that the second end is capable of processing the message in which the subtype of the MPTCP option is the first subtype. Therefore, the first end may send, to the second end, the message in which the subtype of the MPTCP option is the first subtype. If the second capability information indicates that the first end and the second end jointly support the first subtype, it means that both the first end and the second end are capable of processing the message in which the subtype of the MPTCP option is the first subtype. Therefore, the first end may also send, to the second end, the message in which the subtype of the MPTCP option is the first subtype.

Correspondingly, the second end receives, from the first end, the message carrying the indication information of the first type, where the first type of the information is one of the plurality of types of the information.

When the plurality of subtypes of the MPTCP option correspond to the plurality of types of the indication information, the second end receives, from the first end, the message in which the subtype of the MPTCP option is the first subtype, where the first subtype is one of the plurality of subtypes.

Through step 104, the first end sends, to the second end, the message carrying the indication information of the first type.

Step 105: The second end sends, to the first end based on that the first capability information indicates that the first end supports a second type of the indication information, a message carrying indication information of the second type, where the second type of the information is one of the plurality of types of the information.

When the plurality of subtypes of the MPTCP option correspond to the plurality of types of the indication information, step 105 includes:
The second end sends, to the first end based on that the first capability information indicates that the first end supports a second subtype, a message in which a subtype of an MPTCP option is the second subtype, where the second subtype is one of the plurality of subtypes.

Similarly, if the first capability information indicates that the first end supports the second subtype, it means that the first end is capable of processing the message in which the subtype of the MPTCP option is the second subtype. Therefore, the second end may send, to the first end, the message in which the subtype of the MPTCP option is the second subtype.

It may be understood that step 105 needs to be performed after the MPTCP connection between the first end and the second end is completely established. Therefore, step 105 needs to be performed after the second end sends the MPTCP connection establishment response message to the first end.

Correspondingly, after the first end receives, from the second end, the MPTCP connection establishment response message for the MPTCP connection establishment request message, the method further includes:
The first end receives, from the second end, the message carrying the indication information of the second type, where the second type of the information is one of the plurality of types of the information.

When the plurality of subtypes of the MPTCP option correspond to the plurality of types of the indication information, the foregoing step includes:
The first end receives, from the second end, the message in which the subtype of the MPTCP option is the second subtype, where the second subtype is one of the plurality of subtypes.

Through step 105, the second end sends, to the first end, the message in which the subtype of the MPTCP option is the second subtype.

In this embodiment of this application, the first end determines, by using the second capability information, the support status of the second end for the plurality of types of the indication information. Therefore, the first end may determine that the second end supports the first type of the information, and may send, to the second end, the message carrying the indication information of the first type. In this way, consumption of network transmission resources is reduced. In addition, additional overheads caused by a process in which the peer end processes indication information that cannot be processed can also be avoided, and an exception caused by the process in which the peer end processes the indication information that cannot be processed can also be avoided.

Based on the foregoing descriptions, it can be learned that there may be a plurality of locations of the first capability information in the MPTCP connection establishment request message, and there may also be a plurality of storage locations of the second capability information in the MPTCP connection establishment response message. The following describes two storage locations.

### First location:

The first capability information is added to a subtype-specific data field corresponding to the subtype MP_CAPABLE.

Specifically, the MPTCP option in the MPTCP connection establishment request message includes a first value of a subtype field or a first value of a subtype-specific data field.

The first value of the subtype field indicates that a subtype of the MPTCP option in the MPTCP connection establishment request message is MPTCP Capable.

The first value of the subtype-specific data field indicates first specific data of MPTCP Capable, and the first specific data includes the first capability information.

In this embodiment of this application, the MPTCP option may be shown in FIG. 9. The first specific data includes 4-byte first capability information. In addition, the first specific data may further include a key of the first end and a key of the second end. Moreover, the MPTCP option further includes a version field, and the version field indicates MPTCP version information.

The MPTCP version information may be MPTCPvO or MPTCPvl. With an increase in MPTCP versions, the MPTCP version information may alternatively be MPTCPv2, MPTCPv3, or the like.

As shown in FIG. 9, the version field occupies 4 binary bits. For example, when a value of the version field is 00, it indicates that the MPTCP version information is MPTCPv0, or when a value of the version field is 01, it indicates that the MPTCP version information is MPTCPv1.

In this embodiment of this application, no new subtype of the MPTCP option is added, and the first capability information is stored in the first specific data of MPTCP Capable, so that the first capability information is carried in the MPTCP connection establishment request message.

Similarly, the second capability information may also be stored in specific data of MPTCP Capable. Specifically, in an implementation, the MPTCP option in the MPTCP connection establishment response message includes a second value of a subtype field and a second value of a subtype-specific data field.

The second value of the subtype field indicates that a subtype of the MPTCP option in the MPTCP connection establishment response message is MPTCP Capable.

The second value of the subtype-specific data field indicates second specific data of MPTCP Capable, and the second specific data includes the second capability information.

It should be noted that, the second capability information is similar to the first capability information. Therefore, refer to the foregoing related descriptions of the first capability information to understand the second capability information, and details are not described herein again.

In the foregoing embodiment, no new subtype of the MPTCP option is added, and the first capability information is stored in the first specific data of MPTCP Capable. In addition, a subtype, namely, an extended subtype, of the MPTCP option, may be added, so that the first capability information and the second capability information are carried in a specific data field of the extended subtype. This is described in detail below.

### Second location:

In this embodiment of this application, a subtype is added based on the 10 subtypes shown in the foregoing Table 1. In this embodiment of this application, the subtype is referred to as an extended subtype, and the first capability information is stored in a specific data field of the extended subtype. Because the first capability information indicates the support status of the first end for the plurality of subtypes, the extended subtype may also be referred to as an MPTCP Capable List MP_CAP_LIST subtype.

It should be noted that, there may be a plurality of other naming manners for the extended subtype. This is not specifically limited in this embodiment of this application.

Specifically, the MPTCP option in the MPTCP connection establishment request message includes a third value of a subtype field or a third value of a subtype-specific data field.

The third value of the subtype field indicates that a subtype of the MPTCP option in the MPTCP connection establishment request message is an extended subtype. Because the extended subtype is newly added, the extended subtype is not included in the plurality of subtypes. The third value indicating the extended subtype field is usually uniformly allocated by the International Internet Engineering Task Force (The Internet Engineering Task Force, IETF for short).

The third value of the subtype-specific data field indicates third specific data of the extended subtype, and the third specific data includes the first capability information. Based on the foregoing descriptions, it can be learned that the subtype of the MPTCP option in the MPTCP connection establishment request message is usually the subtype, namely, MPTCP Capable, to indicate that the first end supports the subtype, namely, MPTCP Capable. However, in this embodiment of this application, the subtype of the MPTCP option in the MPTCP connection establishment request message is the extended subtype. Therefore, the first capability information needs to indicate that the first end supports MPTCP Capable, and MPTCP Capable is one of the plurality of subtypes.

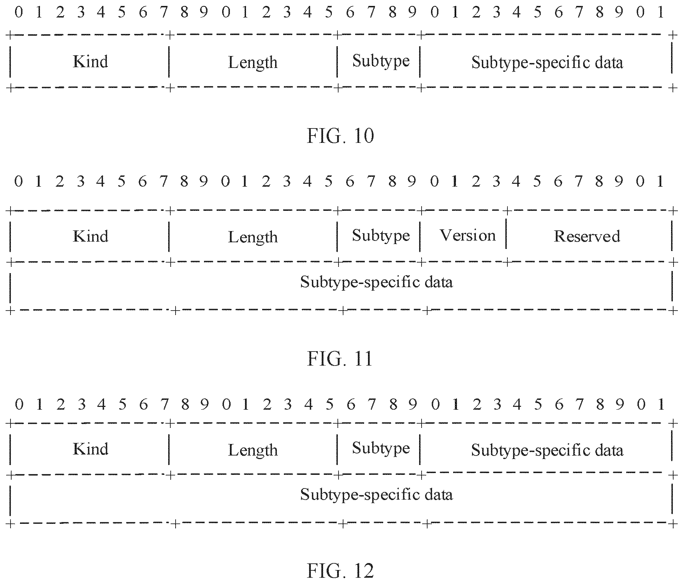

In this case, a structure of the MPTCP option may be shown in FIG. 10. To be specific, the MPTCP option includes a 1-byte kind field, a 1-byte length field, a subtype field, and a subtype data field. The subtype field and the subtype data field occupy 2 bytes in total. Specifically, the subtype field occupies 4 binary bits, and the subtype data field occupies 12 binary bits. However, only 10 subtypes are shown in the foregoing Table 1. Therefore, the first capability information needs to indicate, by using only 10 binary bits, a support status for the 10 subtypes in Table 1, and the remaining 2 binary bits may be used to store other information in the future.

In this embodiment of this application, the extended subtype is added, and the first capability information is stored in the specific data field of the extended subtype, so that the first capability information is carried in the MPTCP connection establishment request message.

In an implementation, the MPTCP option in the MPTCP connection establishment request message further includes a version Version field, and the version field indicates MPTCP version information.

It should be noted that, a length of the Version field is not specifically limited in this embodiment of this application, and may be adjusted according to an actual requirement.

Correspondingly, a structure of the MPTCP option may be shown in FIG. 11. To be specific, in addition to the kind field, the length field, the subtype field, and the subtype data field, the MPTCP option further includes the version field. A value of the version field in the MPTCP option may indicate specific MPTCP version information, so that the second end can determine, with reference to the MPTCP version information, the support status of the first end for the plurality of subtypes.

The MPTCP version information may be MPTCPvO or MPTCPvl. With an increase in MPTCP versions, the MPTCP version information may alternatively be MPTCPv2, MPTCPv3, or the like.

As shown in FIG. 11, the version field occupies 4 binary bits. For example, when a value of the version field is 00, it indicates that the MPTCP version information is MPTCPv0, or when a value of the version field is 01, it indicates that the MPTCP version information is MPTCPv1.

It can be learned from the foregoing content in Table 1 that, subtypes corresponding to the MPTCP version information MPTCPvO and the MPTCP version information MPTCPvl are different.

In FIG. 11, the subtype-specific data field occupies 4 bytes. Only 10 binary bits in the 4 bytes may be used to indicate the first capability information, and the remaining binary bits are used to indicate other information. In addition, there are 8 binary bits (that is, 1 byte) left in the version field and the subtype-specific data field, and this part is a reserved part to store other information.

It may be understood that, during actual application, another function may be added. Therefore, in an implementation, a length of the subtype data field may be increased, to facilitate future function extension.

Specifically, based on an increase in the length of the subtype data field, the third specific data of the extended subtype indicated by the third value of the subtype-specific data field may further include extended first information. Content of the extended first information may be selected according to an actual requirement.

It should be noted that, the length of the subtype data field may be increased according to an actual requirement, and this is not specifically limited in this embodiment of this application. For example, the structure of the MPTCP option may be shown in FIG. 11. In FIG. 11, the length of the subtype data field in the MPTCP option including the version field is increased. Compared with FIG. 9, 22 additional binary bits are added to the subtype data field, and extended information is stored in the 22 added binary bits. For another example, a structure of the MPTCP option may be shown in FIG. 12. To be specific, 4 additional bytes are added to increase the length of the subtype data field, and extended information is stored in the 4 added bytes.

In the foregoing example, the first capability information is stored in the specific data of the extended subtype. Similarly, the second capability information may also be stored in the specific data of the extended subtype. The following provides specific descriptions.

In an implementation, the MPTCP option in the MPTCP connection establishment response message includes a fourth value of a subtype field and a fourth value of a subtype-specific data field.

The fourth value of the subtype field indicates that a subtype of the MPTCP option in the MPTCP connection establishment response message is an extended subtype. The extended subtype is not included in the plurality of subtypes.

The fourth value of the subtype-specific data field indicates fourth specific data of the extended subtype, and the fourth specific data includes the second capability information. The second capability information indicates that the second end supports MPTCP Capable or the first end and the second end jointly support MPTCP Capable, and MPTCP Capable is one of the plurality of subtypes.

It should be noted that, the second capability information is similar to the first capability information. Therefore, refer to the foregoing related descriptions of the first capability information to understand the second capability information, and details are not described herein again.

In an implementation, the MPTCP option in the MPTCP connection establishment request message further includes a version field, and the version field indicates MPTCP version information.

In an implementation, the fourth specific data further includes extended second information of the extended subtype.

To better understand the data transmission method provided in this embodiment of this application, the following further describes the method by using an application example.

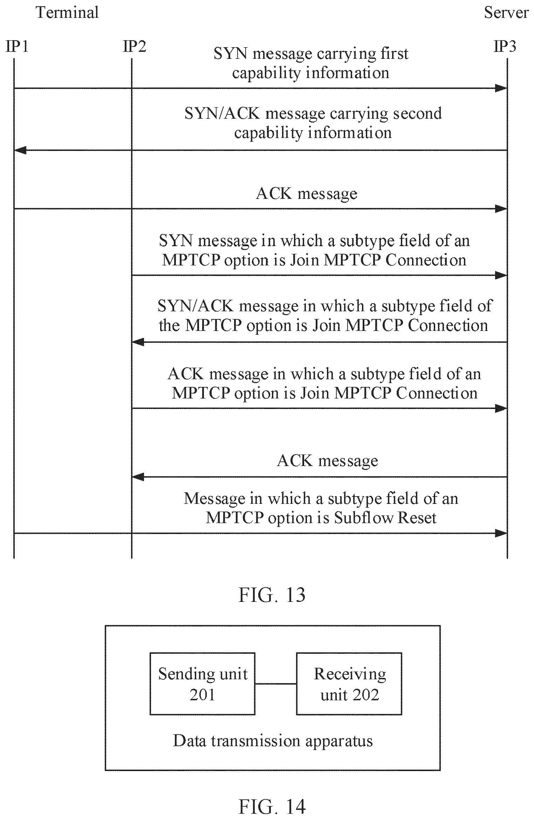

Refer to FIG. 13. MPTCP is used as an example. The terminal has IP1 and IP2, and the server has IP3. The method includes the following steps.

Step 1: The terminal sends, to the server, a synchronization sequence number SYN message in which a subtype field of an MPTCP option is an extended subtype, where the SYN message is used to establish an MPTCP connection between IP1 and IP3. A specific data field of the MPTCP option in the SYN message includes first capability information, and the first capability information indicates that the terminal supports three subtypes: MPTCP Capable, Join MPTCP Connection, and Subflow Reset. If the first capability information indicates that the terminal supports MPTCP Capable, it means that the terminal has a capability of establishing an MPTCP connection.

Step 2: The server sends, to the terminal, a synchronization sequence number/acknowledgment character SYN/ACK message in which a subtype field of an MPTCP option is an extended subtype, where a specific data field of the MPTCP option in the SYN/ACK message includes second capability information, and the second capability information indicates that the server supports three subtypes: MPTCP Capable, Join MPTCP Connection, and Subflow Reset. If the second capability information indicates that the server supports MPTCP Capable, it means that the server has a capability of establishing an MPTCP connection.

Step 3: The terminal sends an ACK message to the server, to complete establishment of the MPTCP connection between IP1 and IP3.

Step 4: Because the second capability information indicates that the server supports the subtype, namely, Join MPTCP Connection, it means that the server has a capability of joining an MPTCP connection. Therefore, the terminal sends, to the server, a SYN message in which a subtype field of an MPTCP option is Join MPTCP Connection, where the SYN message is used to establish an MPTCP connection between IP2 and IP3.

Step 5: The server sends, to the terminal, a SYN/ACK message in which a subtype field of an MPTCP option is Join MPTCP Connection.

Step 6: The terminal sends, to the server, an ACK message in which a subtype field of an MPTCP option is Join MPTCP Connection.

Step 7: The server sends an ACK message to the terminal, to complete establishment of the MPTCP connection between IP2 and IP3.

Step 8: Based on that the second capability information indicates the subtype, namely, Subflow Reset, which means that the server has a capability of resetting a subflow, the terminal sends, to the server, a message in which a subtype field of an MPTCP option is Subflow Reset, to reset a subflow.

Refer to FIG. 14. An embodiment of this application further provides a data transmission apparatus, applied to a first end and including:
a sending unit 201, configured to send a transport layer protocol connection establishment request message to a second end, where the transport layer protocol connection establishment request message carries first capability information, and the first capability information indicates a support status of the first end for a plurality of types of indication information; and
a receiving unit 202, configured to receive, from the second end, a transport layer protocol connection establishment response message for the transport layer protocol connection establishment request message, where the transport layer protocol connection establishment response message carries second capability information, and the second capability information indicates a support status of the second end for the plurality of types of the indication information or indicates a joint support status of the first end and the second end for the plurality of types of the indication information.

The sending unit 201 is further configured to send, to the second end based on that the second capability information indicates that the second end supports a first type of the indication information or indicates that the first end and the second end jointly support the first type of the indication information, a message carrying indication information of the first type, where the first type of the information is one of the plurality of types of the information.

In an implementation, the transport layer protocol connection establishment request message is a quick user datagram protocol Internet connection QUIC establishment request message, and the transport layer protocol connection establishment response message is a QUIC establishment response message; or the transport layer protocol connection establishment request message is a multipath MPQUIC establishment request message, and the transport layer protocol connection establishment response message is an MPQUIC establishment response message.

In an implementation, the transport layer protocol connection establishment request message is a multipath transmission control protocol MPTCP connection establishment request message, and the transport layer protocol connection establishment response message is an MPTCP connection establishment response message.

In an implementation, the indication information is an MPTCP option, the plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option. The second capability information indicates a support status of the second end for the plurality of subtypes of the MPTCP option or indicates a joint support status of the first end and the second end for the plurality of subtypes of the MPTCP option.

The sending unit 201 is configured to send, to the second end based on that the second capability information indicates that the second end supports a first subtype of the MPTCP option or indicates that the first end and the second end jointly support the first subtype of the MPTCP option, a message carrying an MPTCP option of the first subtype, where the first subtype is one of the plurality of subtypes.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In an implementation, an MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype; and the third value of the subtype-specific data field indicates third specific data of the extended subtype, and the third specific data includes the first capability information.

In an implementation, the MPTCP option in the MPTCP connection establishment request message further includes a version field, and the version field indicates MPTCP version information.

In an implementation, the third specific data further includes extended first information.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In an implementation, the MPTCP option in the MPTCP connection establishment response message further includes a version field, and the version field indicates MPTCP version information.

In an implementation, the fourth specific data further includes extended second information.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

In an implementation, the receiving unit 202 is further configured to receive, from the second end, a message carrying indication information of a second type, where the second type of the information is one of the plurality of types of the information.

For specific implementations, related descriptions, and technical effects of the foregoing units, refer to descriptions in the method part of embodiments of this application.

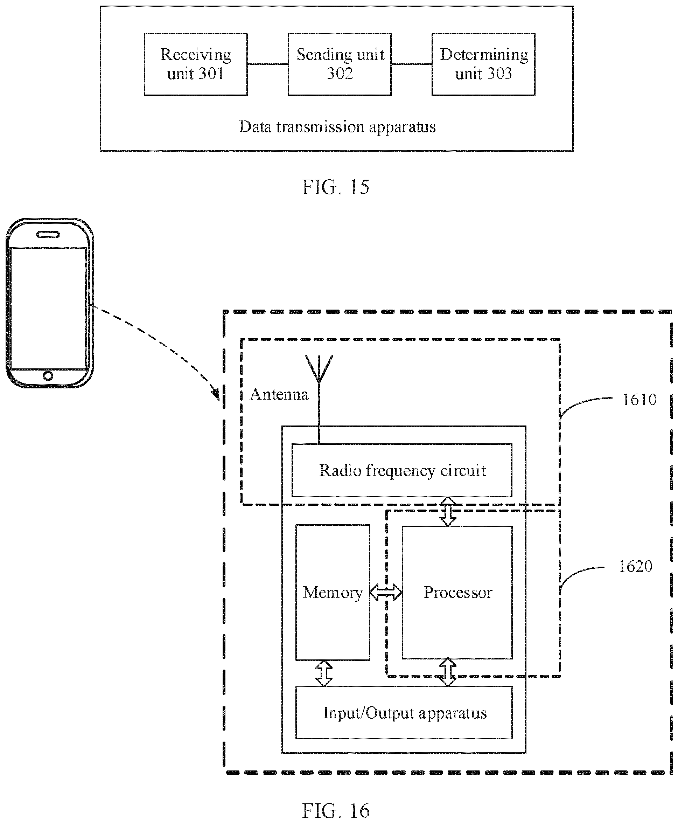

Refer to FIG. 15. An embodiment of this application further provides a data transmission apparatus, applied to a second end and including:
a receiving unit 301, configured to receive a transport layer protocol connection establishment request message from a first end, where the transport layer protocol connection establishment request message carries first capability information, and the first capability information indicates a support status of the first end for a plurality of types of indication information; and a sending unit 302, configured to send a transport layer protocol connection establishment response message to the first end in response to the transport layer protocol connection establishment request message, where the transport layer protocol connection establishment response message carries second capability information, and the second capability information indicates a support status of the second end for the plurality of types of the indication information or indicates a joint support status of the first end and the second end for the plurality of types of the indication information, where the receiving unit 301 is configured to receive, from the first end, a message carrying indication information of the first type, where the first type of the information is one of the plurality of types of the information.

In an implementation, the transport layer protocol connection establishment request message is a quick user datagram protocol Internet connection QUIC establishment request message, and the transport layer protocol connection establishment response message is a QUIC establishment response message; or
the transport layer protocol connection establishment request message is a multipath MPQUIC establishment request message, and the transport layer protocol connection establishment response message is an MPQUIC establishment response message.

In an implementation, the transport layer protocol connection establishment request message is a multipath transmission control protocol MPTCP connection establishment request message, and the transport layer protocol connection establishment response message is an MPTCP connection establishment response message.

In an implementation, the indication information is an MPTCP option, the plurality of types of the indication information correspond to a plurality of subtypes of the MPTCP option, and each subtype of the MPTCP option corresponds to one type of the indication information. The first capability information indicates a support status of the first end for the plurality of subtypes of the MPTCP option. The second capability information indicates a support status of the second end for the plurality of subtypes of the MPTCP option or indicates a joint support status of the first end and the second end for the plurality of subtypes of the MPTCP option. The receiving unit 301 is configured to receive, from the first end, a message carrying indication information of the first type, where the first subtype is one of the plurality of subtypes.

In an implementation, an MPTCP option in the MPTCP connection establishment request message includes a first value of a subtype field and a first value of a subtype-specific data field; the first value of the subtype field indicates that a subtype of the MPTCP option in the MPTCP connection establishment request message is MPTCP Capable MP_CAPABLE; and the first value of the subtype-specific data field indicates first specific data of MP_CAPABLE, and the first specific data includes the first capability information.

In an implementation, an MPTCP option in the MPTCP connection establishment response message includes a second value of a subtype field and a second value of a subtype-specific data field; the second value of the subtype field indicates that a subtype of the MPTCP option in the MPTCP connection establishment response message is MP_CAPABLE; and the second value of the subtype-specific data field indicates second specific data of MP_CAPABLE, and the second specific data includes the second capability information.

In an implementation, an MPTCP option in the MPTCP connection establishment request message includes a third value of a subtype field and a third value of a subtype-specific data field; the third value of the subtype field indicates that a subtype of the MPTCP option in the MPTCP connection establishment request message is an extended subtype; and the third value of the subtype-specific data field indicates third specific data of the extended subtype, and the third specific data includes the first capability information.

In an implementation, the MPTCP option in the MPTCP connection establishment request message further includes a version field, and the version field indicates MPTCP version information.

In an implementation, the third specific data further includes extended first information.

In an implementation, an MPTCP option in the MPTCP connection establishment response message includes a fourth value of a subtype field and a fourth value of a subtype-specific data field; the fourth value of the subtype field indicates that a subtype of the MPTCP option in the MPTCP connection establishment response message is an extended subtype; and the fourth value of the subtype-specific data field indicates fourth specific data of the extended subtype, and the fourth specific data includes the second capability information.

In an implementation, the MPTCP option in the MPTCP connection establishment response message further includes a version field, and the version field indicates MPTCP version information.

In an implementation, the fourth specific data further includes extended second information.

In an implementation, the plurality of subtypes include at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

In an implementation, the second capability information indicates the joint support status of the first end and the second end for the plurality of subtypes of the MPTCP option. The apparatus further includes: a determining unit 303, configured to determine the second capability information based on the first capability information and third capability information, where the third capability information indicates a support status of the second end for the plurality of types of the indication information.

In an implementation, the sending unit 302 is further configured to send, to the first end based on that the first capability information indicates that the first end supports a second type of the indication information, a message carrying indication information of the second type, where the second type of the information is one of the plurality of types of the information.

FIG. 16 is a possible schematic structural diagram of a terminal device below.

FIG. 16 is a simplified schematic structural diagram of the terminal device. For ease of understanding and illustration, an example in which the terminal device is a mobile phone is used in FIG. 16. As shown in FIG. 16, the terminal device includes a processor, a memory, a radio frequency circuit, an antenna, and an input/output apparatus. The processor is mainly configured to: process a communication protocol and communication data, control the terminal device, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display screen, or a keyboard, is mainly configured to: receive data entered by a user, and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 16 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 16, the terminal device includes a transceiver unit 1610 and a processing unit 1620. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1610 is configured to perform a sending operation and a receiving operation of the terminal device in the foregoing method embodiments, and the processing unit 1620 is configured to perform an operation other than the sending and receiving operations of the terminal device in the foregoing method embodiments.

In a possible implementation, the terminal device shown in FIG. 16 is used as a first end, and correspondingly, the transceiver unit 1610 is configured to:
send a transport layer protocol connection establishment request message to a second end, where the transport layer protocol connection establishment request message carries first capability information, and the first capability information indicates a support status of the first end for a plurality of types of indication information;
receive, from the second end, a transport layer protocol connection establishment response message for the transport layer protocol connection establishment request message, where the transport layer protocol connection establishment response message carries second capability information, and the second capability information indicates a support status of the second end for the plurality of types of the indication information or indicates a joint support status of the first end and the second end for the plurality of types of the indication information; and
send, to the second end based on that the second capability information indicates that the second end supports a first type of the indication information or indicates that the first end and the second end jointly support the first type of the indication information, a message carrying indication information of the first type, where the first type of the information is one of the plurality of types of the information.

In a possible implementation, the terminal device shown in FIG. 16 is used as a first end, and correspondingly, the transceiver unit 1610 is configured to:
receive a transport layer protocol connection establishment request message from a first end, where the transport layer protocol connection establishment request message carries first capability information, and the first capability information indicates a support status of the first end for a plurality of types of indication information;
send a transport layer protocol connection establishment response message to the first end in response to the transport layer protocol connection establishment request message, where the transport layer protocol connection establishment response message carries second capability information, and the second capability information indicates a support status of the second end for the plurality of types of the indication information or indicates a joint support status of the first end and the second end for the plurality of types of the indication information; and
receive, from the first end, a message carrying indication information of the first type, where the first type of the information is one of the plurality of types of the information.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip. In the foregoing method embodiments, a sending operation corresponds to an output of the input/output circuit, and a receiving operation corresponds to an input of the input/output circuit.

An embodiment of this application further provides a chip, including one or more processors. Some or all of the processors are configured to read and execute a computer program stored in a memory, to perform the method in each embodiment corresponding to FIG. 8.

Optionally, the chip includes the memory, and the memory and the processor are connected to the memory by using a circuit or a wire. Further, optionally, the chip system further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

An embodiment of this application further provides a computer storage medium. The computer storage medium is configured to store computer software instructions used by the foregoing computer device, and the computer software instructions include a program designed for execution by the computer device.

The computer device may be the apparatus for running an application program described in FIG. 14 or FIG. 15.

An embodiment of this application further provides a computer program product. The computer program product includes computer software instructions. The computer software instructions may be loaded by a processor to implement a procedure of the method shown in FIG. 8.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected according to actual requirements, to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A data transmission method, comprising:
sending, by a first end, a transport layer protocol connection establishment request message to a second end, wherein the transport layer protocol connection establishment request message carries first capability information, and the first capability information indicates a support status of the first end for a plurality of types of indication information;
receiving, by the first end from the second end, a transport layer protocol connection establishment response message for the transport layer protocol connection establishment request message, wherein the transport layer protocol connection establishment response message carries second capability information, and the second capability information indicates a support status of the second end for the plurality of types of the indication information or indicates a joint support status of the first end and the second end for the plurality of types of the indication information; and
sending, by the first end to the second end based on that the second capability information indicates that the second end supports a first type of the indication information or indicates that the first end and the second end jointly support the first type of the indication information, a message carrying indication information of the first type, wherein the first type of the information is one of the plurality of types of the information.

2. The method according to claim 1, wherein the transport layer protocol connection establishment request message is a quick user datagram protocol Internet connection QUIC establishment request message, and the transport layer protocol connection establishment response message is a QUIC establishment response message; or
the transport layer protocol connection establishment request message is a multipath MPQUIC establishment request message, and the transport layer protocol connection establishment response message is an MPQUIC establishment response message.

3. The method according to claim 1, wherein the transport layer protocol connection establishment request message is a multipath transmission control protocol MPTCP connection establishment request message, and the transport layer protocol connection establishment response message is an MPTCP connection establishment response message

4. The method according to claim 3, wherein the indication information is an MPTCP option, the plurality of types of the indication information correspond to a plurality of subtypes of the MPTCP option, and each subtype of the MPTCP option corresponds to one type of the indication information;
the first capability information indicates a support status of the first end for the plurality of subtypes of the MPTCP option;
the second capability information indicates a support status of the second end for the plurality of subtypes of the MPTCP option or indicates a joint support status of the first end and the second end for the plurality of subtypes of the MPTCP option; and
the sending, by the first end to the second end based on that the second capability information indicates that the second end supports a first type of the indication information or indicates that the first end and the second end jointly support the first type of the indication information, a message carrying indication information of the first type comprises:
sending, by the first end to the second end based on that the second capability information indicates that the second end supports a first subtype of the MPTCP option or indicates that the first end and the second end jointly support the first subtype of the MPTCP option, a message carrying an MPTCP option of the first subtype, wherein the first subtype is one of the plurality of subtypes.

5. The method according to claim 4, wherein an MPTCP option in the MPTCP connection establishment request message comprises a first value of a subtype field and a first value of a subtype-specific data field;
the first value of the subtype field indicates that a subtype of the MPTCP option in the MPTCP connection establishment request message is MPTCP Capable MP_CAPABLE; and
the first value of the subtype-specific data field indicates first specific data of MP_CAPABLE, and the first specific data comprises the first capability information.

6. The method according to claim 4 or 5, wherein an MPTCP option in the MPTCP connection establishment response message comprises a second value of a subtype field and a second value of a subtype-specific data field;
the second value of the subtype field indicates that a subtype of the MPTCP option in the MPTCP connection establishment response message is MP_CAPABLE; and
the second value of the subtype-specific data field indicates second specific data of MP_CAPABLE, and the second specific data comprises the second capability information.

7. The method according to claim 4, wherein an MPTCP option in the MPTCP connection establishment request message comprises a third value of a subtype field and a third value of a subtype-specific data field;
the third value of the subtype field indicates that a subtype of the MPTCP option in the MPTCP connection establishment request message is an extended subtype; and
the third value of the subtype-specific data field indicates third specific data of the extended subtype, and the third specific data comprises the first capability information.

8. The method according to claim 7, wherein the MPTCP option in the MPTCP connection establishment request message further comprises a version field, and the version field indicates MPTCP version information.

9. The method according to claim 7 or 8, wherein the third specific data further comprises extended first information.

10. The method according to any one of claims 4 and 7 to 9, wherein an MPTCP option in the MPTCP connection establishment response message comprises a fourth value of a subtype field and a fourth value of a subtype-specific data field;
the fourth value of the subtype field indicates that a subtype of the MPTCP option in the MPTCP connection establishment response message is an extended subtype; and
the fourth value of the subtype-specific data field indicates fourth specific data of the extended subtype, and the fourth specific data comprises the second capability information.

11. The method according to claim 10, wherein the MPTCP option in the MPTCP connection establishment response message further comprises a version field, and the version field indicates MPTCP version information.

12. The method according to claim 10 or 11, wherein the fourth specific data further comprises extended second information.

13. The method according to any one of claims 4 to 12, wherein the plurality of subtypes comprise at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

14. The method according to any one of claims 1 to 13, wherein after the receiving, by the first end from the second end, a transport layer protocol connection establishment response message for the transport layer protocol connection establishment request message, the method further comprises:
receiving, by the first end from the second end, a message carrying indication information of a second type, wherein the second type of the information is one of the plurality of types of the information.

15. A data transmission method, comprising:
receiving, by a second end, a transport layer protocol connection establishment request message from a first end, wherein the transport layer protocol connection establishment request message carries first capability information, and the first capability information indicates a support status of the first end for a plurality of types of indication information;
sending, by the second end, a transport layer protocol connection establishment response message to the first end in response to the transport layer protocol connection establishment request message, wherein the transport layer protocol connection establishment response message carries second capability information, and the second capability information indicates a support status of the second end for the plurality of types of the indication information or indicates a joint support status of the first end and the second end for the plurality of types of the indication information; and
receiving, by the second end from the first end, a message carrying indication information of the first type, wherein the first type of the information is one of the plurality of types of the information.

16. The method according to claim 15, wherein the transport layer protocol connection establishment request message is a quick user datagram protocol Internet connection QUIC establishment request message, and the transport layer protocol connection establishment response message is a QUIC establishment response message; or
the transport layer protocol connection establishment request message is a multipath MPQUIC establishment request message, and the transport layer protocol connection establishment response message is an MPQUIC establishment response message.

17. The method according to claim 15, wherein the transport layer protocol connection establishment request message is a multipath transmission control protocol MPTCP connection establishment request message, and the transport layer protocol connection establishment response message is an MPTCP connection establishment response message

18. The method according to claim 17, wherein the indication information is an MPTCP option, the plurality of types of the indication information correspond to a plurality of subtypes of the MPTCP option, and each subtype of the MPTCP option corresponds to one type of the indication information;
the first capability information indicates a support status of the first end for the plurality of subtypes of the MPTCP option;
the second capability information indicates a support status of the second end for the plurality of subtypes of the MPTCP option or indicates a joint support status of the first end and the second end for the plurality of subtypes of the MPTCP option; and
the receiving, by the second end from the first end, a message carrying indication information of the first type comprises:
receiving, by the second end from the first end, a message carrying indication information of the first type, wherein the first subtype is one of the plurality of subtypes.

19. The method according to claim 18, wherein an MPTCP option in the MPTCP connection establishment request message comprises a first value of a subtype field and a first value of a subtype-specific data field;
the first value of the subtype field indicates that a subtype of the MPTCP option in the MPTCP connection establishment request message is MPTCP Capable MP_CAPABLE; and
the first value of the subtype-specific data field indicates first specific data of MP_CAPABLE, and the first specific data comprises the first capability information.

20. The method according to claim 18 or 19, wherein an MPTCP option in the MPTCP connection establishment response message comprises a second value of a subtype field and a second value of a subtype-specific data field;
the second value of the subtype field indicates that a subtype of the MPTCP option in the MPTCP connection establishment response message is MP_CAPABLE; and
the second value of the subtype-specific data field indicates second specific data of MP_CAPABLE, and the second specific data comprises the second capability information.

21. The method according to claim 18, wherein an MPTCP option in the MPTCP connection establishment request message comprises a third value of a subtype field and a third value of a subtype-specific data field;
the third value of the subtype field indicates that a subtype of the MPTCP option in the MPTCP connection establishment request message is an extended subtype; and
the third value of the subtype-specific data field indicates third specific data of the extended subtype, and the third specific data comprises the first capability information.

22. The method according to claim 21, wherein the MPTCP option in the MPTCP connection establishment request message further comprises a version field, and the version field indicates MPTCP version information.

23. The method according to claim 21 or 22, wherein the third specific data further comprises extended first information.

24. The method according to any one of claims 18 and 21 to 23, wherein an MPTCP option in the MPTCP connection establishment response message comprises a fourth value of a subtype field and a fourth value of a subtype-specific data field;
the fourth value of the subtype field indicates that a subtype of the MPTCP option in the MPTCP connection establishment response message is an extended subtype; and
the fourth value of the subtype-specific data field indicates fourth specific data of the extended subtype, and the fourth specific data comprises the second capability information.

25. The method according to claim 24, wherein the MPTCP option in the MPTCP connection establishment response message further comprises a version field, and the version field indicates MPTCP version information.

26. The method according to claim 24 or 25, wherein the fourth specific data further comprises extended second information.

27. The method according to any one of claims 18 to 26, wherein the plurality of subtypes comprise at least one of MPTCP Capable, Join MPTCP Connection, Data Acknowledgment Character and Data Sequence Mapping, Add Address, Remove Address, Change Subflow Priority, Fallback, Fast Close, Subflow Reset, and Reserved for Private Use.

28. The method according to any one of claims 15 to 27, wherein the second capability information indicates the joint support status of the first end and the second end for the plurality of subtypes of the MPTCP option; and
before the sending, by the second end, a transport layer protocol connection establishment response message to the first end, the method further comprises:
determining, by the second end, the second capability information based on the first capability information and third capability information, wherein the third capability information indicates a support status of the second end for the plurality of types of the indication information.

29. The method according to any one of claims 15 to 28, wherein after the sending, by the second end, a transport layer protocol connection establishment response message to the first end, the method further comprises:
sending, by the second end to the first end based on that the first capability information indicates that the first end supports a second type of the indication information, a message carrying indication information of the second type, wherein the second type of the information is one of the plurality of types of the information.

30. A data transmission apparatus, applied to a first end and comprising:
a sending unit, configured to send a transport layer protocol connection establishment request message to a second end, wherein the transport layer protocol connection establishment request message carries first capability information, and the first capability information indicates a support status of the first end for a plurality of types of indication information; and
a receiving unit, configured to receive, from the second end, a transport layer protocol connection establishment response message for the transport layer protocol connection establishment request message, wherein the transport layer protocol connection establishment response message carries second capability information, and the second capability information indicates a support status of the second end for the plurality of types of the indication information or indicates a joint support status of the first end and the second end for the plurality of types of the indication information, wherein
the sending unit is further configured to send, to the second end based on that the second capability information indicates that the second end supports a first type of the indication information or indicates that the first end and the second end jointly support the first type of the indication information, a message carrying indication information of the first type, wherein the first type of the information is one of the plurality of types of the information.

31. A data transmission apparatus, applied to a second end and comprising:
a receiving unit, configured to receive a transport layer protocol connection establishment request message from a first end, wherein the transport layer protocol connection establishment request message carries first capability information, and the first capability information indicates a support status of the first end for a plurality of types of indication information; and
a sending unit, configured to send a transport layer protocol connection establishment response message to the first end in response to the transport layer protocol connection establishment request message, wherein the transport layer protocol connection establishment response message carries second capability information, and the second capability information indicates a support status of the second end for the plurality of types of the indication information or indicates a joint support status of the first end and the second end for the plurality of types of the indication information, wherein
the receiving unit is configured to receive, from the first end, a message carrying indication information of the first type, wherein the first type of the information is one of the plurality of types of the information.

32. A computer device, comprising at least one processor and a memory, wherein the memory stores computer-executable instructions that can be run on the processor, and when the computer-executable instructions are executed by the processor, the processor performs the method according to any one of claims 1 to 14, or performs the method according to any one of claims 15 to 29.

33. A computer-readable storage medium storing one or more computer-executable instructions, wherein when the computer-executable instructions are executed by a processor, the processor performs the method according to any one of claims 1 to 29.

34. A computer program product, comprising computer-readable instructions, wherein when the computer-readable instructions are run on a computer, the computer is enabled to perform the method according to any one of claims 1 to 29.
